# EUROPÄISCHE PATENTSCHRIFT

(11) **EP 0 339 466 B1**
(45) Veröffentlichungstag und Bekanntmachung des Hinweises auf die Patenterteilung: **21.07.1993**
(21) Anmeldenummer: 89107041.9
(22) Anmeldetag: 19.04.1989
(51) Int. Cl.: G06F 13/12

(54) **Verfahren und Anordnung zur zeitgerechten Bereitstellung von nicht im Voraus lesbaren Kanalbefehlswörtern bei der Ausführung von Ein-/Ausgabeoperationen in einem mit realen Adressen arbeitenden Ein-/Ausgabesystem einer Datenverarbeitungsanlage**
Method and arrangement for the real time set up of non-prefetched channel command words during the execution of I/O operations for an I/O system using real addressing in a data processing unit
Méthode et dispositif pour la préparation en temps réel des mots du canal de commande sans lecture anticipée par l'exécution d'une opération d'entrée-sortie d'un système d'entrée-sortie travaillant avec des adresses réelles d'un dispositif de traitement de données

(30) Priorität: 29.04.1988 DE 3814637
(43) Veröffentlichungstag der Anmeldung: 02.11.1989
(73) Patentinhaber: Siemens Nixdorf Informationssysteme Aktiengesellschaft, 33102 Paderborn (DE)
(72) Erfinder: Dietl, Erich, Dipl.-Ing., D-8200 Rosenheim (DE); Schmitt, Heinz-Peter, Dipl.-Phys., D-8000 München 83 (DE)
(74) Vertreter: Fuchs, Franz-Josef, Dr.-Ing.

(56) Entgegenhaltungen:
- EP-A- 0 297 481
- US-A- 3 810 105
- JOURNAL OF SCIENCE AND TECHNOLOGY, Band 36, Nr. 3, 1969, Seiten 139-142; J.C. GLADMAN et al.: "The M2140 computer: a multi-processor system for real-time control"
- IBM TECHNICAL DISCLOSURE BULLETIN, Band 13, Nr. 8, Januar 1971, Seite 2382, New York, US; D.J. LUCAS: "Address chaining mode in channel operations"

## Beschreibung

Die Erfindung betrifft ein Verfahren und eine Anordnung zur zeitgerechten Bereitstellung von nicht im Voraus lesbaren Kanalbefehlswörtern bei der Ausführung von Ein-/Ausgabeoperationen in einem mit realen Adressen arbeitenden Ein-/Ausgabesystem einer Datenverarbeitungsanlage entsprechend dem Oberbegriff des Patentanspruchs 1.

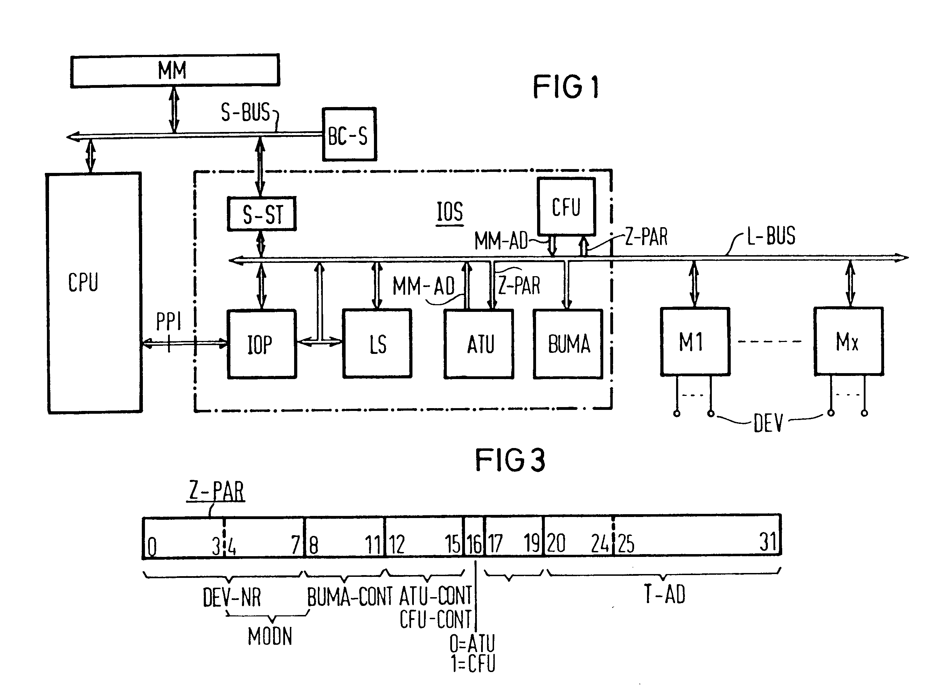

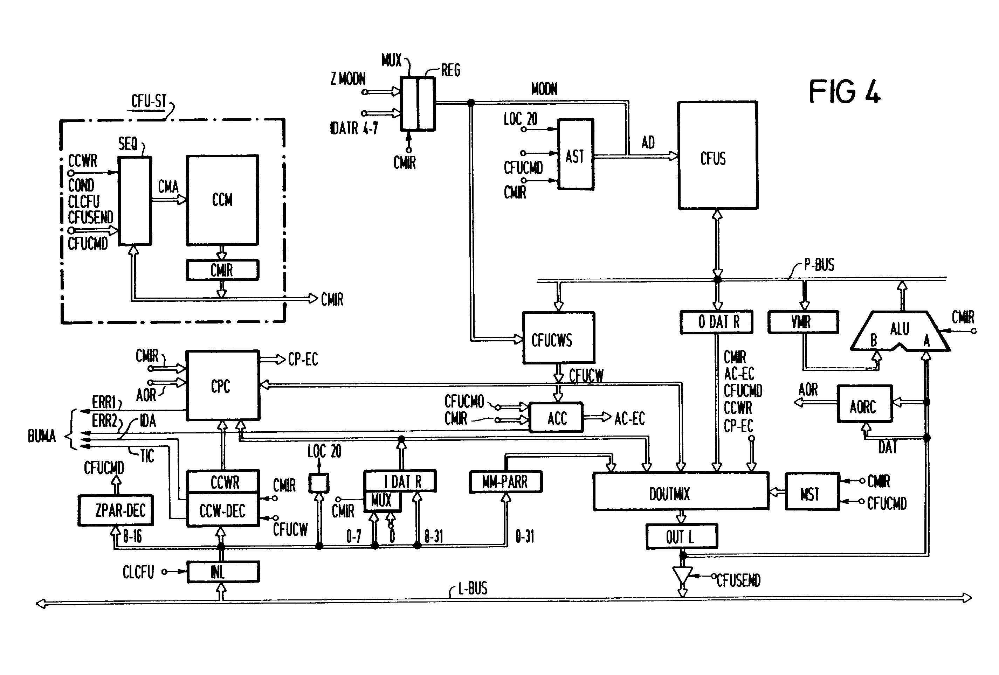

Datenverarbeitungsanlagen mit einem gesonderten Ein-/Ausgabeleitungssystem sind bereits in vielerlei Ausführungsformen bekannt, zum Beispiel durch "Electronic Design" 7, March 29, 1979, Seiten 102 bis 106, insbesondere FIG 4 auf Seite 104, durch "Regelungstechnische Praxis", Heft 11, 1975, Seiten 331 bis 339, insbesondere Bild 1 und 2 auf Seite 332 und durch DE-OS 30 48 417, FIG 1.

Die durch die ersten beiden genannten Literaturstellen bekannten Anordnungen zeichnen sich dadurch aus, daß vom Ein-/Ausgabeleitungssystem aus ein direkter Zugriff zum Hauptspeicher möglich ist, so daß Daten zwischen den peripheren Geräten und dem Hauptspeicher unmittelbar ausgetauscht werden können.

Die zur Steuerung der Ein-/Ausgabeoperationen verwendeten Kanalprogramme bedienen sich je nach Art der der Hardware-Software-Schnittstelle (HSI) der Anlage zugrundeliegenden Spezifikation (Common Functional Characteristics of the HW-System CFCS) virtueller oder realer Speicheradressen, wobei bei virtueller Adressierung zunächst eine Adressenübersetzung durchzuführen ist, bevor ein Speicherzugriff im Rahmen einer Ein-/Ausgabeoperation möglich ist - man siehe zum Beispiel Siemens Druckschrift U 3211-J-Z53-1 "BS2000-Technische Beschreibung", Band "Basissystem", Seiten 20 bis 43.

Verschiedene Möglichkeiten der Bewältigung der Adressenumsetzung bei virtueller Adressierung in Verbindung mit dem Ein-/Ausgabesystem sind in der europäischen Patentschrift 0156989-B1 auf Seite 2 angesprochen, die darüber hinaus eine weitere Lösung beschreibt. Allen diesen Lösungen ist gemeinsam, daß - abgesehen von der Übersetzung der Adressen - die Bereitstellung der jeweils benötigten Kanalbefehlswörter durch den unterstützenden Prozessor des Ein-/Ausgabesystems gesteuert wird, der diese vorauseilend liest und die Folgeadressen im Voraus übersetzt und für die Ein-/Ausgabeeinheiten bereitstellt.

Wird dagegen für die Kanalprogramme gemäß der Spezifikation CFCS3, Version 2 die reale Adressierung verwendet und ist kein Vorausholen der jeweils benötigten Kanalbefehlswörter möglich, dann ergeben sich besondere Anforderungen für den unterstützenden Prozessor, da dieser auf eine Anforderung für das jeweils benötigte Kanalbefehlswort äußerst kurzfristig reagieren und das Kanalbefehlswort sehr schnell einer Fehleranalyse unterziehen muß, bevor es der anfordernden Ein-/Ausgabeeinheit zur Verfügung gestellt werden kann. Diese Situation verschärft sich in zunehmendem Maße, wenn die Anforderungen mehrerer Ein-/Ausgabeeinheiten zeitlich zusammenfallen, so daß es zu unnötigen Verzögerungen bei der Bearbeitung der einzelnen Kanalprogramme kommen kann.

Aufgabe der Erfindung ist es daher, das Ein-/Ausgabesystem so zu betreiben und zu gestalten, daß auch bei einer Betriebsweise, zum Beispiel gemäß CFCS3, Version 2, ohne Möglichkeit des Vorausholens der einzelnen Kanalbefehlswörter eine rechtzeitige Bereitstellung der Kanalbefehlswörter kostengünstig möglich ist.

Diese Aufgabe wird bezüglich des Verfahrens gemäß der Erfindung entsprechend den Merkmalen des Patentanspruches 1 gelöst.

Danach wird die Aufgabe der Bereitstellung einer gesonderten Bereitstellungseinheit übertragen, die die jeweils benötigten Adressen speichert und anpaßt, die Kanalbefehlswörter analysiert, die nötigen Prüfungen durchführt, sowie die benötigten Steuerparameter verwaltet. Da diese Bereitstellungseinheit nur die im Zusammenhang mit der Bereitstellung von Kanalbefehlswörtern benötigten Aufgaben und die damit verbundene Verwaltung von Adressen und Steuerkennzeichen auszuführen hat, kann sie im Aufbau und in ihren Arbeitsabläufen so strukturiert werden, daß die gestellten Zeitbedingungen mit einer kostengünstigeren Schaltkreistechnologie einfacher erfüllbar sind.

Die Bereitstellungseinheit ist dabei organisch in den Arbeitsablauf am Ein-/Ausgabeleitungssystem einbezogen, indem sie bei jeder von einer Ein-/Ausgabeeinheit ausgehenden Anforderung parallel zur zentralen Steuereinheit des Ein-/Ausgabeleitungssystems über den damit gekoppelten Verbindungswunsch und -zweck informiert wird und dementsprechend reagieren kann, beispielsweise um beim Zugriff zum Hauptspeicher die fehlende Speicheradresse für die Übertragung zur Speicherschnittstelle bereitzustellen. Der unterstützende Prozessor wird demzufolge nur bei der Einleitung einer Ein-/Ausgabeoperation, bei Unterbrechungsanforderungen oder im Fehlerfall tätig.

Weiterbildungen der Erfindung entsprechend den Patentansprüchen 2 bis 7 beziehen sich auf verschiedene Arbeitsabläufe beim Auftreten von Programmverzweigungsbefehlen und bei indirekter Adressierung, die zusätzliche Zugriffe zum Hauptspeicher durch die Bereitstellungseinheit erfordern, und auf die Zusammenarbeit zwischen der Bereitstellungseinheit und der zentralen Steuereinheit des Ein-/Ausgabeleitungssystems, damit die durch die verschiedenen Arbeitsabläufe der Bereitstellungseinheit bedingten Verbindungsumschaltungen und Informationsübertragungen mit Vorrang ausgeführt werden. Gemäß den Patentansprüchen 8 und 9 erfolgt die Übertragungssteuerung mit entsprechender Verbindungsumschaltung in Anlehnung an die Deutsche Patentanmeldung (P 37 21 598.1) mit aus einzelnen taktgesteuerten Übertragungszyklen für je ein zu übertragendes Datenwort zusammengesetzten Übertragungssequenzen, die jeweils mit einer einzigen Anforderung eingeleitet und dann abhängig von beispielsweise in der Bereitstellungseinheit ausgelösten Reaktionssignalen in unterschiedlicher Weise beeinflußt werden.

Die Patentansprüche 10 bis 12 betreffen schließlich eine erfindungsgemäße Anordnung zur Durchführung dieser Verfahren. Kernstück dieser Anordnung sind zwei Speicher, von denen der eine als Adressenspeicher je Ein-/Ausgabeeinheit eine Reihe von Speicheradressen und der andere je Ein-/Ausgabeeinheit ein aus einzelnen Steuerbits und -bitkombinationen zusammengesetztes Steuerwort gespeichert enthält, und deren Speicherinhalte im Rahmen der einzelnen, von einer Ablaufsteuerung kontrollierten Arbeitsabläufe ermittelt, überwacht und angepaßt werden.

Einzelheiten der Erfindung seien nachfolgend anhand eines in der Zeichnung dargestellten Ausführungsbeispieles näher erläutert. Im einzelnen zeigen
- FIG 1: ein Blockschaltbild einer Datenverarbeitungsanlage mit an ein gemeinsames Leitungssystem angeschlossenen Ein-/Ausgabeeinheiten,
- FIG 2: ein Blockschaltbild zur Erläuterung der Zusammenarbeit der zentralen Steuereinheit des Ein-/Ausgabeleitungssystems mit den angeschlossenen Einheiten,
- FIG 3: eine Darstellung eines mit jeder Anforderung an die zentrale Steuereinheit des Ein-/Ausgabeleitungssystems gelieferten Parameterwortes,
- FIG 4: ein Blockschaltbild der Bereitstellungseinheit gemäß der Erfindung,
- FIG 5: die Belegung des Adressenspeichers CFUS von FIG 4 je Ein-/Ausgabeeinheit,
- FIG 6: die Belegung des Steuerspeichers CFUCWS von FIG 4 je Ein-/Ausgabeeinheit,
- FIG 7: den Aufbau eines Kanalbefehlswortes,
- FIG 8: ein Flußdiagramm zur Erläuterung der Arbeitsweise der Bereitstellungseinheit beim Holen eines neuen Kanalbefehlswortes,
- FIG 9: ein Flußdiagramm in Ergänzung von FIG 8 zur Erläuterung der Anpassung der Einträge in den Speichern der Bereitstellungseinheit,
- FIG 10: ein Flußdiagramm zur Erläuterung der Arbeitsweise der Bereitstellungseinheit beim Bereitstellen einer im Voraus angeforderten neuen Datenseitenadresse,
- FIG 11: formale Ablaufschemen zur Steuerung der Übertragungssequenz für das Holen eines Kanalbefehlswortes und
- FIG 12: formale Ablaufschemen zur Steuerung der Übertragungssequenz für das Bereitstellen einer neuen Datenseitenadresse.

Die in FIG 1 gezeigte Datenverarbeitungsanlage besteht in herkömmlicher Weise aus einem Hauptspeicher MM mit Zugriffsteuerung, zum Beispiel einem Speicherleitungssystem S-BUS mit Zuteilungssteuerung BC-S, an die über Schnittstellensteuerungen S-ST ein Zentralprozessor CPU und ein Ein-/Ausgabesystem IOS angeschlossen ist. Letzteres besteht entsprechend der EP-B1-0156989 zum Beispiel aus einem Ein-/Ausgabeprozessor IOP und einem Ein-/Ausgabeleitungssystem L-BUS, an das mehrere Ein-/Ausgabeeinheiten Ml bis Mx zur Ansteuerung peripherer Geräte DEV angeschlossen sind. Neben dem Ein-/Ausgabeprozessor IOP mit lokalem Speicher LS ist innerhalb des Ein-/Ausgabesystems IOS eine Adressensteuereinheit ATU vorgesehen, die gleichfalls als selbständige Einheit an das Ein-/Ausgabeleitungssystem L-BUS angeschlossen ist, wobei der lokale Speicher LS einen Teil der normalerweise in Übergabebereichen des Hauptspeichers MM abgelegten Steuerdaten für die einzelnen Ein-/Ausgabeaufträge gespeichert enthält und die Adressensteuereinheit ATU vom Ein-/Ausgabeprozessor IOP bereitgestellte reelle Speicheradressen liefert. Die Arbeitsweise der Adressensteuereinheit ATU ist in der EP-B1-0156989 ausführlich beschrieben, worauf aber im Zusammenhang mit der vorliegenden Erfindung nicht näher eingegangen zu werden braucht.

In Auswirkung der Erfindung ist zusätzlich eine Bereitstellungseinheit CFU als selbständige Einheit innerhalb des Ein-/Ausgabesystems IOS vorgesehen und an das Ein-/Ausgabeleitungssystem L-BUS angeschlossen, wobei auf Anforderung immer nur eine der beiden Einheiten ATU oder CFU wirksam wird.

Das Ein-/Ausgabeleitungssystem L-BUS wird durch die zentrale Steuereinheit BUMA überwacht und gesteuert, die im vorliegenden Falle in das Ein-/Ausgabesystem IOS einbezogen ist. Außerdem hat das Leitungssystem L-BUS über die Schnittstellensteuerung S-ST und das Speicherleitungssystem S-BUS direkten Zugriff zum Hauptspeicher MM, so daß die Ein-/Ausgabeeinheiten Ml bis Mx Zugriffe zum Hauptspeicher MM mit Hilfe der Adressensteuereinheit ATU oder der Bereitstellungseinheit CFU weitgehend selbständig ausführen können.

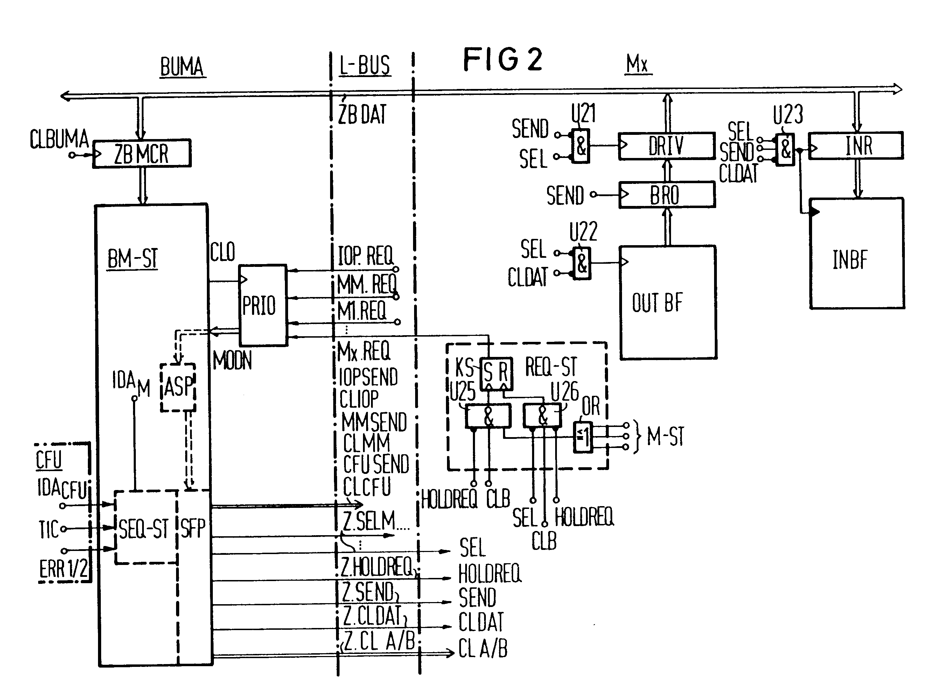

FIG 2 zeigt Teile der zentralen Steuereinheit BUMA und einer Ein-/Ausgabeeinheit Mx in schematischer Darstellung mit den notwendigen Steuer- und Datenleitungen des gemeinsamen Leitungssystems L-BUS, um Anforderungen auswählen und abwickeln zu können.

Die zentrale Steuereinheit BUMA ist zu diesem Zweck mit jeder Einheit, zum Beispiel Mx, am gemeinsamen Leitungssystem L-BUS mit einer individuellen Anforderungsleitung, zum Beispiel Mx.REQ, verbunden, die von einer Prioritätssteuereinrichtung PRIO überwacht werden. Beispielsweise zu vorgegebenen Zeitpunkten, die durch das Taktsignal CLO bestimmt sind, wird die Adresse MODN der jeweils die höchste Priorität aufweisenden anfordernden Einheit ermittelt und davon abhängig, sobald das Leitungssystem L-BUS verfügbar ist, eine zugehörige individuelle Auswahlleitung als Aufforderung zum Senden eines Parameterwortes Z-PAR über die Datenleitungen ZBDAT an die zentrale Steuereinheit BUMA aktiviert. Dieses Parameterwort wird mit einem abgestimmten Taktimpuls CLBUMA in das Register ZBMCR übernommen und an die interne Steuerung BM-ST weitergeleitet. Anhand der im empfangenen Parameterwort enthaltenen Steuerinformationen wird dann die anfordernde Einheit über die zum Senden auffordernde individuelle Auswahlleitung, zum Beispiel MM.SEND für den Hauptspeicher MM oder CFUSEND für die Bereitstellungseinheit CFU, und die empfangende Partnereinheit mit einer individuellen Auswahlleitung zum Empfangen, zum Beispiel CLMM für den Hauptspeicher MM und CLCFU für die Bereitstellungseinheit CFU, angesteuert, so daß ein in der anfordernden Einheit zum Senden bereitgestelltes Daten- oder Informationswort über die Datenleitungen ZBDAT zum Empfangsregister der empfangenden Partnereinheit übertragen wird.

Sind gemäß der von der zentralen Steuereinheit BUMA mit dem Parameterwort Z-PAR empfangenen Steuerinformationen mehrere Datenwörter hintereinander zu übertragen, dann wiederholt sich die Signalgabe über die zugehörigen Signalleitungen entsprechend oft.

In analoger Weise werden auch Anforderungen IOP.REQ bzw. MM.REQ des unterstützenden Prozessors IOP bzw. der Schnittstellensteuerung S-ST für den Hauptspeicher MM für die übrigen selbständigen Einheiten des Ein-/Ausgabeleitungssystems L-BUS abgewickelt.

Für die Wirksamschaltung einer Einheit als Empfänger oder als Sender sind also normalerweise zwei getrennte individuelle Auswahlleitungen erforderlich. Dies trifft im vorliegenden Falle für die Ein-/Ausgabeeinheiten Ml bis Mx nicht zu, da diese Einheiten untereinander keine Daten austauschen. Die Auswahlsteuerung ist daher vereinfacht und benötigt für jede Ein-/Ausgabeeinheit Ml bis Mx nur eine individuelle Auswahlleitung Z.SELM... in Verbindung mit zwei gemeinsamen Steuerleitungen Z.SEND und Z.CLDAT, wobei bezogen auf die Ein-/Ausgabeeinheit Mx ein Senden mit der Signalkombination Z.SELMx ∧ Z.SEND und ein Empfang mit der Signalkombination Z.SELMx ∧ Z̅.̅S̅E̅N̅D̅ ∧ Z.CLDAT bewirkt wird.

Betroffen ist also jeweils nur die mit Z.SELM... ausgewählte Ein-/Ausgabeeinheit M..., wobei mit Z.SEND vom Empfangszustand in den Sendezustand umgeschaltet wird und im Empfangszustand mit Z.CLDAT jeweils ein Datenwort übernommen wird. Entsprechend wirken in jeder Ein-/Ausgabeeinheit die Signale SEL und SEND über ein UND-Glied U21 zusammen, um die Ausgangstreiber DRIV für die Datenleitungen ZBDAT zu aktivieren, die über ein vorgeschaltetes Register BRO mit dem jeweils zu sendenden Datenwort gespeist werden. Dieses Register wird mit dem Signal SEND getaktet. Andererseits wirken die Signale SEL und CLDAT über ein UND-Glied U22 auf die Steuerschaltung beispielsweise eines Pufferspeichers OUTBF, um das jeweils nachfolgende Datenwort für die Übernahme in das Register BRO bereitzustellen, wenn mehr als ein Datenwort in Folge gesendet werden soll.

Weiterhin wird das Empfangsregister INR über ein UND-Glied U23 zur Übernahme von Datenwörtern auf den Datenleitungen ZBDAT jeweils durch das Zusammenwirken der Signale SEL, S̅E̅N̅D̅ und CLDAT mit einem Übernahmeimpuls beaufschlagt, wobei ein davon abgeleiteter verzögerter Impuls die Weiterleitung des im Register INR jeweils zwischengespeicherten Datenwortes, beispielsweise an einen Pufferspeicher INBF, steuert.

Als weiteres ist die in jeder Einheit vorgesehene Anforderungssteuerung REQ-ST im Prinzip dargestellt. Anforderungssignale der internen Steuerung M-ST gelangen zusammengefaßt über ein ODER-Glied OR auf ein UND-Glied U25, über das eine Kippstufe KS gesetzt wird, die das Anforderungssignal für die zugehörige individuelle Anforderungsleitung, zum Beispiel Mx.REQ, liefert. Das Setzsignal am Ausgang des UND-Gliedes U25 wird nur in Verbindung mit einem über die Signalleitung Z.HOLDREQ wirksamen Signal HOLDREQ und mit einem über die Taktleitungen Z.CLA/B gelieferten Taktimpuls CLB ausgelöst. Zurückgesetzt wird die Kippstufe KS dagegen über das UND-Glied U26 mit dem Signal SEL nach Annahme einer Forderung in Verbindung mit dem Signal HOLDREQ und dem Taktimpuls CLB. Die Auslösung einer Anforderung und das Abschalten des Anforderungssignals ist also nur unter Kontrolle der zentralen Steuereinheit BUMA mit dem Signal HOLDREQ auf der gemeinsamen Steuerleitung Z.HOLDREQ möglich.

FIG 3 zeigt den Aufbau des nach Annahme einer Anforderung übertragenen Parameterwortes Z-PAR, das eine Steuerinformation BUMA-CONT für die zentrale Steuereinheit BUMA des Leitungssystems L-BUS enthält, die den weiteren Steuerungsablauf bestimmt. Diese Steuerinformationen wählen in der Ablaufsteuerung SEQ-ST die einem jeweils zugehörigen Ablaufschema entsprechenden Steuersequenzen aus, die nacheinander die Signalflipflops SFP für die Erzeugung der jeweils benötigten Steuerleitungssignale wirksam schalten.

Die übrigen Steuerinformationen sind weitgehend von der Art der anfordernden Einheit abhängig. Handelt es sich um eine der Ein-/Ausgabeeinheiten Mx, dann enthält das Parameterwort Z-PAR entsprechend der oberen Hinweiszeile u.a. die Nummer DEV-NR des peripheren Gerätes DEV sowie abhängig vom Bit 16 eine Steuerinformation ATU-CONT für die Adressensteuereinheit ATU oder CFU-CONT für die Bereitstellungseinheit CFU und schließlich eine Teiladresse T-AD. Bei Anforderungen vom unterstützenden Prozessor IOP beinhalten die Bit 4 bis 7 die Nummer MODN der Ein-/Ausgabeeinheit M..., für die entsprechend der Steuerinformation BUMA-CONT beispielsweise an die Bereitstellungseinheit CFU Steuerinformationen zu übergeben sind.

Die Adressensteuereinheit ATU und die Bereitstellungseinheit CFU können im vorliegegnden Falle an die zentrale Steuereinheit BUMA des Ein-/Ausgabeleitungssystems L-BUS keine selbständigen Anforderungen auf Zuteilung des Leitungssystems stellen. Sie reagieren lediglich auf Anforderungen der anderen Einheiten am Leitungssystem im Rahmen auszuführender Ein-/Ausgabeoperationen, wobei die Bereitstellungseinheit CFU nur benötigt wird, wenn das System kein Vorauslesen für die von den Ein-/Ausgabeeinheiten M... zu verarbeitenden Kanalbefehlswörter eines bereitgestellten Kanalprogramms zuläßt. Die Bereitstellungseinheit CFU übernimmt damit Funktionen, die im anderen Falle der unterstützende Prozessor IOP ausführt, dies aber bei nicht zulässigem Vorauslesen normalerweise nicht zeitgerecht erfüllen kann, insbesondere wenn mehrere Kanäle gleichzeitig ein neues Kanalbefehlswort anfordern.

Die mit der Bereitstellung der Kanalbefehlswörter verbundenen zeitkritischen Funktionen bewältigt die Bereitstellungseinheit CFU vor allem durch ihren angepaßten strukturellen Aufbau, ohne daß dafür eine schneller arbeitende und damit teuerere Schaltkreistechnologie benötigt wird. FIG 4 zeigt ein Blockschaltbild dieser Bereitstellungseinheit CFU, die wie die übrigen Einheiten an das gemeinsame Ein-/Ausgabeleitungssystem L-BUS über zwei Zwischenregister angeschlossen ist, von denen das eine INL mit dem Steuertakt CLCFU der zentralen Steuereinrichtung BUMA Daten aufnimmt, während aus dem anderen Register OUTL bei Vorliegen des Steuertaktes CFUSEND bereitgestellte Daten abgegeben werden.

Je nach Art der einlaufenden Daten werden diese ganz oder teilweise einem Decoder ZPAR-DEC für das Parameterwort Z-PAR zur Ableitung des die jeweilige Funktion festlegenden Befehlswortes CFUCMD, einem Decoder CCW-DEC für das jeweilige Kanalbefehlswort CCW mit nachgeschaltetem Register CCWR und/oder einem Register IDATR und einer Kippstufe LOC20 für sonstige Daten zugeleitet. Zusätzlich kann noch ein Register MM-PARR zur Zwischenspeicherung des von der jeweiligen Ein-/Ausgabeeinheit Mx gelieferten Speicherparameterwortes MM-PAR vorgesehen sein.

Kernstück der Bereitstellungseinheit CFU sind zwei Speicher CFUS und CFUCWS mit individuellen Einträgen für jedes der an das Leitungssystem L-BUS angeschlossen Ein-/Ausgabeeinheiten Ml bis Mx. Die Ansteuerung dieser Speicher erfolgt daher abhängig von der jeweiligen Nummer MODN der jeweils betroffenen Ein-/Ausgabeeinheit, die entweder mit Z.MODN direkt von der zentralen Steuereinheit BUMA geliefert oder aber dem Register IDATR entnommen und über einen Auswahlschalter MUX im Register REG zur Verfügung steht. Da im Speicher CFUS für jede Einheit mehrere Einträge vorgesehen sind, wird über die Adressensteuerung AST der Einheitsnummer MODN noch eine Teiladresse zur Bildung der vollständigen Ansteueradresse AD zugesetzt.

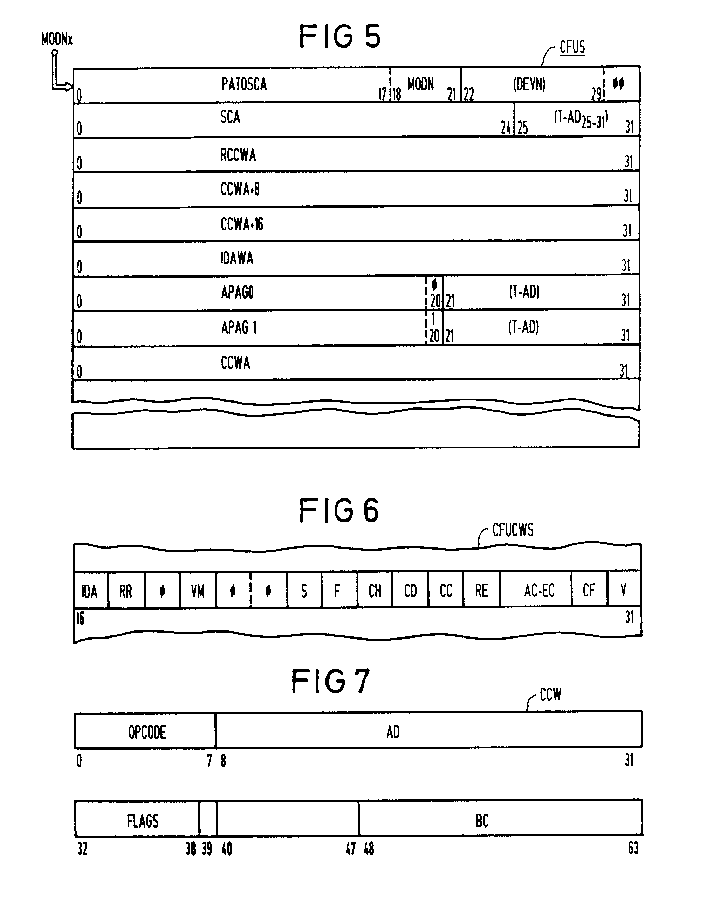

Der Speicher CFUS ist ein Adressenspeicher, der die für die Bereitstellung von Kanalbefehlswörtern wesentlichen Adresseneinträge je Ein-/Ausgabeeinheit M... enthält. Diese sind in FIG 5 wiedergegeben, wobei die Einträge jeweils z.B. 32 Bit umfassen, von denen aber in einigen Fällen nicht alle Bitstellen belegt sind. Diese Einträge haben im einzelnen folgende Bedeutung:
- PATOSCA:: Basisadresse für eine Subkanaladressentafel, die in Verbindung mit der Einheitsnummer MODN und der Gerätenummer DEV-NR die Ermittlung der zuständigen Subkanaladresse SCA ermöglicht.
- SCA:: Adresse des zuständigen Subkanals für den Zugriff auf Steuerinformationen für das abzuarbeitende Kanalprogramm.
- CCWA:: Adresse des laufenden Kanalbefehlswortes CCW.
- CCWA+8:: Adresse des nächsten Kanalbefehlswortes.
- CCWA+16:: Adresse des übernächsten Kanalbefehlswortes.
- RCCWA:: Adresse des bei Wiederholung von Kanaloperationen auszuführenden Kanalbefehlswortes.
- APAG0:: Aus dem laufenden Kanalbefehlswort übernommene Adresse der ersten Seite eines Seitenpaares im anzusteuernden Datenbereich des Hauptspeichers MM.
- APAG1:: Adresse der jeweils zweiten Seite des Seitenpaares.
- IDAWA:: Adresse für die indirekte Adressierung.

Einträge für PATOSCA, SCA, APAG0 und APAG1 im Speicher CFUS sind bei Ansteuerung des Hauptsspeichers MM jeweils um die in Klammern gesetzten Adressenteile zu ergänzen. Es sind dies bei PATOSCA die jeweilige Gerätenummer DEV-NR, die im Parameterwort Z-PAR angeliefert und im Register IDATR gespeichert wird, während bei den Einträgen SCA, APAG0 und APAG1 die ebenfalls im Parameterwort Z-PAR mitgelieferte Teiladresse T-AD oder Teile derselben zu ergänzen sind.

Das Zusammenfassen der verschiedenen Adressenteile für die Übergabe an das gemeinsame Leitungssystem L-BUS besorgt ein Ausgabemischer DOUTMIX, der durch die Steuereinrichtung MST jeweils eingestellt wird und u.a. vom Speicher CFUS über das Ausgaberegister ODATR mit Daten beaufschlagt wird.

Der zweite Speicher CFUCWS ist ein Steuerspeicher, der je Ein-/Ausgabeeinheit Ml bis Mx nur einen einzigen Eintrag von jeweils z.B. 16 Bit Breite als Steuerwort enthält, das aus verschiedenen Quellen zusammengesetzt wird. FIG 6 zeigt den Aufbau eines solchen Steuerwortes CFUCW, wobei die einzelnen Bits bzw. Bitkombinationen z.B. folgende Bedeutung haben:
- IDA:: indirekte Datenadressierung
- RR:: Rückwärtslesen beim laufenden Kanalbefehlswort
- VM:: virtuelle Maschine, bei der zu allen Adressen eine Basisadresse addiert werden muß
- S:: Art der Unterdrückungssteuerung
- F:: Format des Kanalbefehlswortes CCW
- CH:: Art des Kanals
- CD:: Datenkettung
- CC:: Befehlskettung
- RE:: Diskonnektion eines Gerätes mit Wiederholungsankündigung
- AC-EC:: Zugriffsfehlercode
- CF:: wird beim Holen eines Kanalbefehlswortes gesetzt
- V:: Gültigkeitsbit
Die Anfangsdaten oder Steuerbits erhalten die beiden Speicher jeweils zu Beginn einer auszuführenden Ein-/Ausgabeoperation vom unterstützenden Prozessor IOP zugeführt, der nach Übertragung des jeweiligen Anforderungsinformationsblockes (ORB) in den zugehörigen Subkanalinformationsblock (SCHIB) vom Verarbeitungsprozessor CPU angestoßen wird und die im Subkanalinformationsblock bereitgestellten Steuerinformationen aufbereitet. Diese Startfunktion des unterstützenden Prozessors IOP umfaßt z.B. die Ermittlung des jeweiligen Übertragungspfades, d.h. der jeweils anzusteuernden Ein-/Ausgabeeinheit M..., die Zugriff zum gewünschten Gerät DEV hat, des weiteren die Aufbereitung des ersten Kanalbefehlswortes CCW und die Rückmeldung über die Ausführung der Startfunktion an den Verarbeitungsprozessor CPU - man siehe hierzu beispielsweise IBM "Principles of Operation" des IBM-Systems/370 - Extended Architecture, Publication No. SA22-7085-0, Kapitel 14 bis 17.

Den Aufbau eines Kanalbefehlswortes CCW im Format O zeigt FIG 7. Es besteht aus jeweils einem Doppelwort mit insgesamt 64 Bit, von denen die Bit 0 bis 7 den Operationscode OPCODE, die Bit 8 bis 31 die jeweilige Datenadresse AD oder die Adresse für die indirekte Adressierung, die Bit 32 bis 38 die Steuerbits FLAGS und die Bit 48 bis 63 die Anzahl der zu übertragenden Datenbytes darstellen.

In diesem Falle werden auf Anforderung des unterstützenden Prozessors IOP an die zentrale Steuerung BUMA des gemeinsamen Leitungssystems L-BUS in aufeinanderfolgenden Übertragungszyklen, die zusammen eine Übertragungssequenz bilden, zunächst das zusammengestellte Steuerwort in den Speicher CFUCWS und anschließend alle Einträge für den Speicher CFUS übertragen, bevor die zuständige Ein-/Ausgabeeinheit M... über das Vorliegen eines Auftrages in an sich bekannter Weise informiert wird.

Die Steuerbits VM, S, F, CH für das Steuerwort sind aus dem Subkanalinformationsblock ableitbar, während die Steuerbits IDA und RR aus dem ersten Kanalbefehlswort übernommen werden. Gleichzeitig werden die Steuerbits CC, CF und V auf "1" und alle übrigen Steuerbits auf "0" gesetzt.

Denkbar wäre auch, daß bei verkürzter Aufbereitung durch den unterstützenden Prozessor IOP das Holen des ersten Kanalbefehlswortes nach Benachrichtigung der zuständigen Ein-/Ausgabeeinheit M... von dieser veranlaßt wird. In diesem Falle werden nur die Steuerbits VM, S, F und CH des zu übertragenden Steuerworts bestimmt und alle übrigen Bits bis auf Bit V auf "0" gesetzt, während im Speicher CFUS lediglich die Tabellenbasisadresse PATOSCA verfügbar sein muß.

Die einzelnen Funktionsabläufe der Bereitstellungseinheit CFU werden von einer Mikroprogrammsteuerung CFU-ST, bestehend aus einem Mikrobefehlsspeicher CCM mit Befehlsregister CMIR für die gelesenen Mikrobefehle und einer Ablaufsteuerung SEQ, die die Ansteueradressen CMA für den Mikrobefehlsspeicher CCM liefert, gesteuert. Der Einsprung in die jeweilige Startroutine zur Überprüfung des aufgenommenen Parameterwortes Z-PAR im Decoder ZPAR-DEC erfolgt jeweils mit dem Übernahmetakt CLCFU. Danach ist der weitere Funktionsablauf von dem dadurch ermittelten Befehl CFUCMD abhängig und zusätzlich u.a. von auftretenden Betriebsbedingungen COND, vom jeweils decodierten Kanalbefehlswort CCW im Register CCWR und vom Sendetakt CFUSEND beeinflußbar.

Zur Durchführung der verschiedenen Adressenmanipulationen ist zwischen dem Ausgang des Registers OUTL und dem internen Leitungssystem P-BUS ein vereinfachtes Addierwerk ALU als Adressenrechner vorgesehen, der z.B. durch die Addition von Konstanten 8 und 16 aus der laufenden Adresse CCWA die Adressen CCWA+8 und CCWA+16 für das jeweils nächste und übernächste Kanalbefehlswort CCW oder durch Addition der Konstanten +/-2 KByte aus der Seitenadresse APAG0 die Folgeseitenadresse, z.B. APAG1, berechnet, was durch entsprechende Subfunktionen des jeweiligen Mikrobefehls im Register CMIR festgelegt wird. Auch kann bei virtuellen Maschinen eine Basisadresse aus dem Register VMR hinzuaddiert werden.

Von einer Ein-/Ausgabeeinheit Mx angeforderte und vom Hauptspeicher MM gelieferte Kanalbefehlswörter CCW werden jeweils auch von der Bereitstellungseinheit CFU aufgenommen, dem Decoder CCW-DEC zugeführt und das Ergebnis im Register CCWR bereitgestellt. Anschließend werden im Steuerwortspeicher CFUCWS das zugehörige Steuerwort CFUCW angepaßt und im Adressenspeicher CFUS die Adressen modifiziert.

Drei selbständige Prüfeinrichtungen überprüfen im Rahmen der Bereitstellung eines Kanalbefehlswortes CCW jeweils in an sich bekannter Weise, ob die Kanalprogrammbearbeitung ordnungsgemäß abläuft. So überprüft die Einrichtung ACC, ob der Zugriff zur Bereitstellungseinheit CFU überhaupt berechtigt ist oder ob ein Zugriffsfehler vorliegt. Letzteres ist der Fall, wenn noch eine Operation eingeleitet wird, obwohl das zugehörige Gerät bereits diskonnektiert oder ein Kanalprogrammfehler CP-EC erkannt ist, oder wenn ein Datentransfer angefordert wird, obgleich kein gültiges Kanalbefehlswort mehr vorliegt, oder wenn die Bereitstellung eines weiteren Kanalbefehlswortes nicht erlaubt ist. Weiterhin überprüft die Einrichtung AORC, ob die zuständige Kanalbefehlsadresse bzw. die Seitenadresse innerhalb der jeweils zulässigen Grenzen liegt, während die Einrichtung CPC in an sich bekannter Weise prüft, ob irgendein Kanalprogrammfehler vorliegt. Ist irgendein Fehler, z.B. AOR, ACE usw., erkannt, wird die jeweils eingeleitete Übertragungssequenz am gemeinsamen Leitungssystem L-BUS mit ERR1 abgebrochen und der entsprechende Fehlercode CP-EC bzw. AC-EC gebildet.

In gleicher Weise, wie Adressenteile aus verschiedenen Quellen der Bereitstellungseinheit CFU durch den Ausgabemischer OUTMIX zu einer einheitlichen Adresse zusammengefaßt werden, können z.B. auch einzelne Bitstellen der Steuerwörter CFUCW aus dem Speicher CFUCWS durch den Ausgabemischer ergänzt oder abgeändert werden. So werden, wie bereits angedeutet, aus dem Register CCWR für das decodierte Kanalbefehlswort CCW die Bits IDA, RR, CD und CC, aus dem Mikrobefehlsregister CMIR die Bits CF und V und vom ermittelten Befehl CFUCMD das Bit RE abgeleitet, während die Prüfeinrichtung ACC den Zugriffsfehlercode AC-EC liefert. Ebenso kann der Fehlercode CP-EC ausgewählt und im Speicher CFUS abgespeichert bzw. für eine Übertragung bereitgestellt werden. Für die Abspeicherung im Speicher CFUS können die Eintragszeilen APAG0 und APAG1 einzeln oder gemeinsam genutzt werden.

Damit ergibt sich für die Bereitstellungseinheit CFU folgender allgemeiner Arbeitsablauf:
Jedesmal, wenn mit dem ersten Takt CLCFU im Rahmen einer Übertragungssequenz auf dem Ein-/Ausgabeleitungssystem L-BUS das vom Eingangsregister INL aufgenommene Parameterwort Z-PAR empfangen ist, veranlaßt die Steuerung CFU-ST die Decodierung der zuständigen Bits 8 bis 16 des Parameterwortes durch den Decodierer ZPAR-DEC und damit die Feststellung des entsprechenden Befehles CFUCMD, der den weiteren Arbeitsablauf anhand der im Mikrobefehlsregister CMIR nacheinander bereitgestellten Mikrobefehle bestimmt.

Dabei wird in Verbindung mit dem zugehörigen Steuerwort CFUCW im Speicher CFUCWS durch die Einrichtung ACC zunächst geprüft, ob der Zugriff zur Bereitstellungseinheit CFU erlaubt ist und der entsprechende Befehl CFUCMD ausgeführt werden kann. Wird ein Zugriffsfehler AC-EC festgestellt, bildet die Einrichtung ACC ein Fehlersignal ERR2, das an die zentrale Steuereinheit BUMA des Leitungssystems weitergeleitet wird und den Abbruch der eingeleiteten Übertragungssequenz auf dem Leitungssystem L-BUS herbeiführt. Außerdem wird der entsprechende Fehlercode AC-EC im Speicher CFUCWS abgespeichert, so daß er für eine Übertragung, zum Beispiel zum unterstützenden Prozessor IOP, greifbar ist.

Ist der Zugriff zulässig, so wird der durch den jeweiligen Steuerbefehl CFUCMD bestimmte Arbeitsablauf eingeleitet und gegebenenfalls der noch benötigte Teil des Parameterwortes Z-PAR ins Register IDATR übernommen.

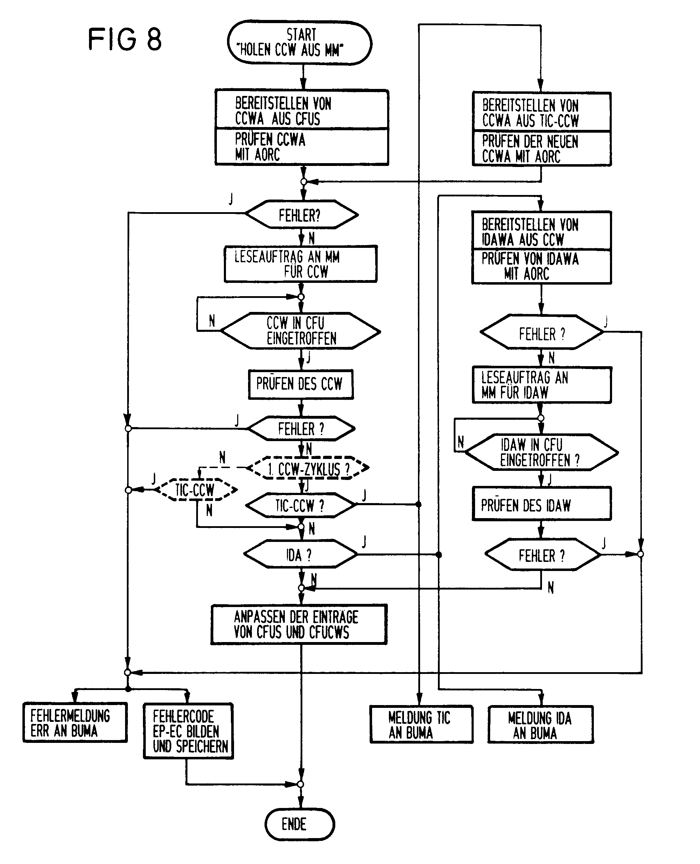

Die Hauptaufgabe der Bereitstellungseinheit CFU besteht voraussetzungsgemäß in der zeitgerechten Bereitstellung eines neuen Kanalbefehlswortes CCW. Den entsprechenden Arbeitsablauf gibt das Flußdiagramm von FIG 8 wieder:

Danach wird zunächst anhand des Steuerbefehls CFUCMD ermittelt, welches Kanalbefehlswort CCW aus dem Hauptspeicher MM gelesen werden soll, und dann die entsprechende Adresse CCWA8, CCWA16 bzw.RCCWA aus dem Speicher CFUS in das Register ODATR gelesen und damit für die Weiterleitung an den Hauptspeicher MM bereitgestellt. Weiterhin wird mit der Einrichtung AORC geprüft, ob die Adresse im vorgegebenen Adressenbereich liegt. Liegt kein Fehler vor, wird der Leseauftrag an den Hauptspeicher MM wirksam und die Bereitstellungseinheit CFU geht in den Wartezustand über.

Sobald das aus dem Hauptspeicher MM angeforderte neue Kanalbefehlswort CCW in der Bereitstellungseinheit CFU eingetroffen ist, werden nacheinander der Operationscode OPCODE und die Steuerbits FLAGS (FIG 7) in den beiden Datenwörtern des Kanalbefehlswortes CCW von der Decodiereinrichtung CCW-DEC ausgewertet und das Ergebnis in das Register CCWR übernommen. Weiterhin wird das Kanalbefehlswort durch die Einrichtung CPC überprüft.

Ist das überprüfte Kanalbefehlswort CCW fehlerfrei und handelt es sich dabei um einen Verzweigungsbefehl TIC, dann wird auf eine erneute Leseanforderung für den Hauptspeicher MM übergeleitet. Dazu wird als erstes die im Register IDATR zwischengespeicherte Adresse AD aus dem ersten Datenwort des Kanalbefehlswortes auf den Ausgang des Ausgabemischers DOUTMIX geschaltet und die Adresse mit der Einrichtung AORC auf Einhaltung der Doppelwortgrenze überprüft und in der Eintragszeile CCWA des Speichers CFUS gesichert. Anschließend wird die Leseanforderung an den Hauptspeicher MM ausgeführt, indem nacheinander das im Register MM-PARR zwischengespeicherte Parameterwort MM-PAR und die im Register IDATR bzw. ODATR bereitstehende Kanalbefehlswortadresse auf den Ausgang des Ausgabemischers DOUTMIX geschaltet werden. Der weitere Steuerungsablauf ist dann der bereits beschriebene.

Handelt es sich beim jeweils gelesenen Kanalbefehlswort nicht um einen Verzweigungsbefehl TIC, ist der weitere Ablauf davon abhängig, ob die Adressierung direkt oder indirekt erfolgt, was am Steuerbit IDA erkennbar ist. Bei direkter Adressierung entspricht die im ersten Datenwort des Kanalbefehlswortes CCW angegebene Adresse AD (FIG 7) unmittelbar der ersten Datenseitenadresse des im Hauptspeicher MM anzusteuernden Datenbereiches. Alle für den weiteren Steuerungsablauf benötigten Daten liegen damit vor, und die Einträge in den beiden Speichern CFUS und CFUCWS können entsprechend angepaßt werden. Nach erfolgter Anpassung ist der Holvorgang für das angeforderte Kanalbefehlswort CCW beendet, und die Bereitstellungseinheit CFU steht für die Entgegennahme neuer Anforderungen bereit.

Bei indirekter Adressierung ist ein erneuter Zugriff zum Hauptspeicher MM erforderlich, um das benötigte Adressenwort IDAW zu holen. Als erstes wird daher wiederum das im Register MM-PARR zwischengespeicherte Parameterwort MM-PAR und anschließend die aus dem Adressenteil des Kanalbefehlswortes übernommene und zwischengespeicherte Adressenwortadresse IDAWA an die Hauptspeicherschnittstelle S-ST übergeben, wobei gleichzeitig die Einrichtung AORC die Grenzeinhaltung überprüft.

Sobald das angeforderte Adressenwort IDAW aus dem Hauptspeicher MM gelesen und in der Bereitstellungseinheit CFU eingetroffen ist, wird auch dieses in an sich bekannter Weise überprüft und es werden die Einträge in den Speichern CFUS und CFUCWS angepaßt, bevor der eingeleitete Arbeitsablauf der Bereitstellungseinheit beendet wird.

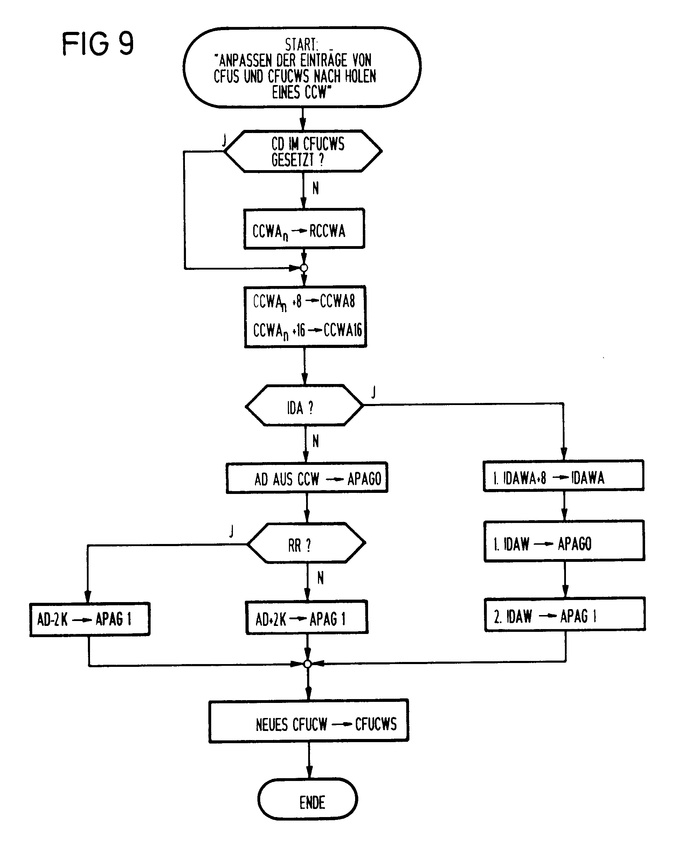

Das Flußdiagramm von FIG 9 zeigt die wesentlichen Arbeitsschritte beim Anpassen der Speichereinträge im Rahmen des beschriebenen Arbeitsablaufes beim Holen eines angeforderten Kanalbefehlswortes CCW:

Meldet das zugehörige Steuerwort CFUCW mit CD=0, daß keine Datenkettung vorliegt, dann wird die im Speicher CFUS abhängig vom gültigen Steuerbefehl CFUCMD gespeicherte Adresse CCWAₙ in das Register ODATR gelesen und über den Ausgabemischer DOUTMIX in die Eintragszeile RCCWA des Speichers CFUS übertragen. Anschließend werden ausgehend von der im Register ODATR gespeicherten Adresse CCWAₙ nacheinander die neuen Folgeadressen CCWAₙ+8 und CCWAₙ+16 durch entsprechende Ansteuerung des Addierers ALU gebildet und in die entsprechenden Eintragszeilen CCWA8 bzw. CCWA16 des Speichers CFUS übertragen.

Wird direkt adressiert (IDA=0), dann wird außerdem die im Register IDATR zwischengespeicherte Adresse AD aus dem ersten Datenwort des Kanalbefehlswortes CCW in die Eintragszeile APAG0 übertragen. Danach wird abhängig vom Steuerbit RR aus derselben Adresse durch Erhöhen bzw. Erniedrigen um den Wert für 2 KByte durch den entsprechend eingestellten Addierer ALU die Adresse für die nächstfolgende Datenseite gebildet und in die Eintragszeile APAG1 übertragen. Die Anpassung der Einträge im Speicher CFUS ist damit beendet. Weiterhin wird das zugehörige Steuerwort CFUCW aus dem Steuerspeicher CFUCWS durch entsprechende Einstellung des Ausgabemischers DOUTMIX angepaßt und in den Steuerspeicher CFUCWS zurück übertragen. Damit ist auch dieser Speicher angepaßt.

Bei indirekter Adressierung (IDA=1) wird die im Eintrag IDAWA vorhandene Adresse entsprechend den damit gelesenen beiden Adressenwörtern 1.IDAW und 2.IDAW um den Wert von acht Byte erhöht und die neue Adresse wieder in die Eintragszeile IDAWA des Speichers CFUS eingetragen. Außerdem werden die aus dem Hauptspeicher MM gelesenen und im Register IDATR jeweils zwischengespeicherten Adressenwörter 1.IDAW und 2.IDAW nacheinander in die Eintragszeilen APAG0 und APAG1 eingegeben, bevor gegebenenfalls das Steuerwort im Steuerspeicher CFUCWS angepaßt wird.

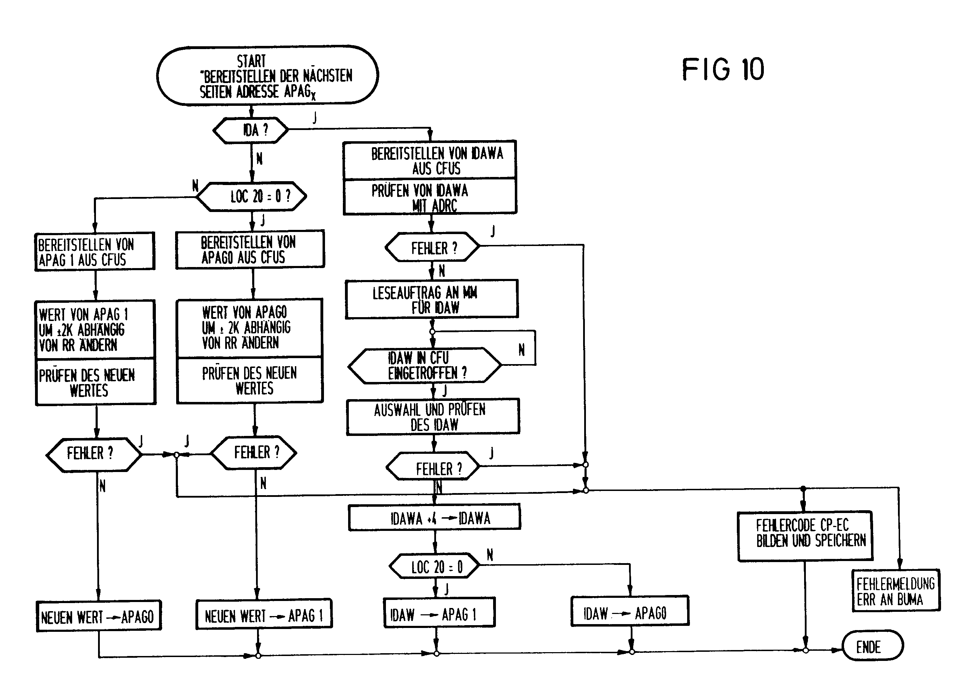

Ein weiterer von dem üblichen Übertragungsablauf auf dem Ein-/Ausgabeleitungssystem L-BUS abweichender Arbeitsablauf der Bereitstellungseinheit CFU betrifft die von einer Ein-/Augabeeinheit Mx während der Bearbeitung eines Kanalbefehlswortes CCW abgegebene Anforderung zur vorauseilenden Ermittlung der demnächst benötigten Datenseitenadresse des anzusteuernden Datenbereiches im Hauptspeicher MM, bevor die Seitengrenze zu dieser Datenseite überschritten wird. Der entsprechende Arbeitsablauf der Bereitstellungseinheit CFU sei nachfolgend anhand des Flußlaufdiagramms von FIG 10 näher erläutert:

Nach Eintreffen des die Anforderung begleitenden Parameterwortes Z-PAR in der Bereitstellungseinheit CFU wird zunächst geprüft, ob direkt oder indirekt zu adressieren ist - Signal IDA_{M}.

Bei direkter Adressierung bestimmt das Bit LOC20 in der Teiladresse T-AD des Parameterwortes Z-PAR, welche Seitenadresse APAG0 oder APAG1 im Speicher CFUS zu lesen und um den Seitenwert 2 KByte zu erhöhen ist, um die Folgeseitenadresse zu erhalten. Diese wird dann auf ihre Grenzeinhaltung geprüft und in die Eintragszeile der bereits verbrauchten Seitenadresse, also APAG1 bzw. APAG0, eingetragen. Während dieses Arbeitsablaufes, der keinen Zugriff zum Hauptspeicher MM erfordert, werden Anforderungen an die Steuerung BUMA für die Bereitstellung des Leitungssystems L-BUS, die die Mitarbeit der Bereitstellungseinheit CFU erfordern, nicht berücksichtigt.

Bei indrekter Adressierung ist dagegen ein Zugriff zum Hauptspeicher MM erforderlich. Es wird daher die Eintragszeile IDAWA im Speicher CFUS gelesen und geprüft sowie die Leseanforderung an den Hauptspeicher MM abgesetzt, um das benötigte Adressenwort IDAW für die nächste Datenseite zu lesen.

Werden in Verbindung mit einem Zugriff zum Hauptspeicher MM mindestens immer zwei Datenwörter entsprechend einem Doppelwort nacheinander übertragen, dann entscheidet das Bit 29 der Adresse IDAWA darüber, ob das erste oder zweite übertragene Adressenwort IDAW auszuwählen ist. Dies wird dann auf Grenzeinhaltung geprüft und in die durch das Bit LOC20 vorgegebene Eintragszeile APAG0 bzw. APAG1 eingetragen, so daß diese beiden Eintragszeilen abwechselnd immer die Datenseitenadresse für die jeweils augenblicklich zuständige Datenseite oder aber für die nächstfolgende Datenseite beinhalten. Außerdem wird die Adresse IDAWA um den Wert von 4 Byte entsprechend der Fortschreibung um ein Datenwort erhöht und die Adresse für das nachfolgende Adressen-wort IDAWA ermittelt, das dann in die Eintragszeile IDAWA des Speichers CFUS eingetragen wird.

Die Arbeitsweise der Bereitstellungseinheit CFU ist im Prinzip unabängig von der Gestaltung und Arbeitsweise des Ein-/Ausgabeleitungssystems L-BUS, solange sichergestellt ist, daß Anforderungen an den Hauptspeicher MM von der Bereitstellungseinheit CFU aus durch selbständige Anforderung an die Steuereinheit des Leitungssystems auf Zuteilung desselben eingeleitet werden können. Das würde aber gegebenenfalls mehrfache Anforderungen auf Zuteilung des Leitungssystems L-BUS im Rahmen eines Arbeitsablaufes und damit unnötige Zeitverluste bedingen.

Die Erfindung nutzt daher zusätzlich die Möglichkeit, wie sie bereits in der älteren deutschen Patentanmeldung P 37 21 508.1 beschrieben ist, wonach die zentrale Steuereinheit BUMA des gemeinsamen Leitungssystems L-BUS aufgrund einer einzigen Anforderung die im Rahmen eines vorgegebenen Arbeitsablaufes notwenigen verschiedenen Verbindungswege zwischen verschiedenen Einheiten nach einem vorgegebenen Ablaufschema selbständig herstellt und wobei ein starres Taktraster für die Übertragung jeweils eines Daten- oder Informationswortes einzelne Übertragungszyklen bildet, die zu entsprechenden Übertragungssequenzen je Anforderung zusammengefaßt werden.

Die in FIG 2 enthaltene zentrale Steuereinheit BUMA arbeitet, wie bereits angedeutet, nach diesem Prinzip, wobei die Ablaufsteuerung SEQ-ST abhängig von den zugeführten Steuerinformationen die jeweiligen Übertragungssequenzen erzeugt. In Auswirkung der Tatsache, das insbesondere beim Holen und Aufbereiten eines Kanalbefehlswortes CCW durch die Bereitstellungseinheit CFU der gesamte Arbeitsablauf und damit die Länge der jeweiligen Übertragungssequenz anhand des auslösenden Parameterwortes Z-PAR nicht von vornherein absehbar ist, müssen zusätzliche Umsteuermöglichkeiten zur Verlängerung der eingeleiteten Übertragungssequenz im Bedarfsfall vorgesehen werden. Hierzu dienen die zusätzlich von der Bereitstellungseinheit CFU zur zentralen Steuereinheit BUMA des Ein-/Ausgabeleitungssystems L-BUS führenden Steuerleitungen TIC, IDA_{CFU} und ERR 1/2, die unmittelbar auf die Ablaufsteuerung SEQ-ST einwirken, um die notwendige Umsteuerung zu bewirken.

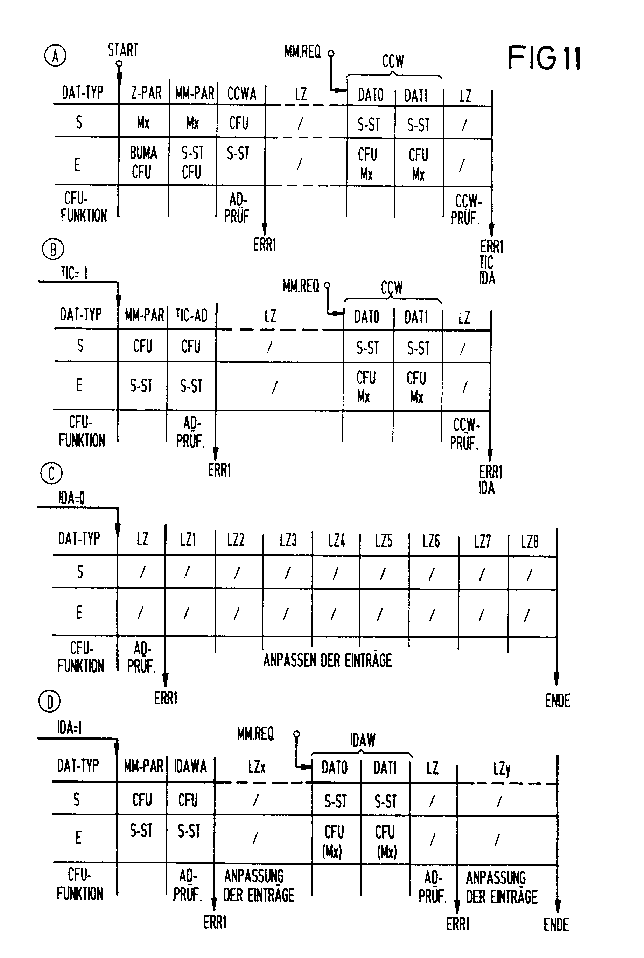

FIG 11 zeigt die sich für das Holen eines Kanalbefehlswortes CCW durch die Bereitstellungseinheit CFU ergebende Übertragungssequenz mit den verschiedenen ablaufbedingten Erweiterungen in Form eines Ablaufschemas, das einerseits die jeweils aufzubauenden Verbindungen zwischen den einzelnen Einheiten am Ein-/Ausgabeleitungssystem L-BUS erkennen läßt und andererseits die Art der jeweils übertragenen Informationen oder Daten angibt. Zu diesem Zweck bezeichnet die obere Zeile DAT-TYP die Art des jeweils zu übertragenden Datenwortes, die zweite Zeile S die jeweils als Sender arbeitenden Einheiten und die dritte Zeile E die jeweils als Empfänger arbeitenden Einheiten. Zusätzlich sind in einer vierten Zeile CFU-FUNKTION einige von der Bereitstellungseinheit CFU ausgeführte Arbeiten angegeben, soweit sie nicht aus dem Kontext der übrigen Zeilen ersichtlich sind.

Das Ablaufschema von FIG 11 ist außerdem in vier Teile A bis D unterteilt, von denen Teil A die Grundsequenz wiedergibt, die immer durchlaufen wird, wenn kein Fehler auftritt, und die wenigstens mit einer der übrigen Teilsequenzen B bis D fortgesetzt wird.

Die Grundsequenz A wird nach Annahme der Anforderung einer der Ein-/Ausgabeeinheiten Mx mit der Übertragung des Parameterwortes Z-PAR von dieser Einheit an die zentrale Steuereinheit BUMA eingeleitet, wobei das Parameterwort gleichzeitig auch der Bereitstellungseinheit CFU zugeführt und von dieser ausgewertet wird. Da es sich um das Holen eines Kanalbefehlswortes CCW aus dem Hauptspeicher MM handelt, wird im zweiten Zyklus das Speicherparameterwort MM-PAR zur Speicherschnittstelle S-ST und zwecks Zwischenspeicherung für weitere Zugriffe auch an die Bereitstellungseinheit CFU übertragen. Im dritten Übertragungszyklus wird dann die Adresse CCWA des zu lesenden Kanalbefehlswortes CCW als Speicheradresse an die Speicherschnittstelle S-ST übermittelt und damit die Leseanforderung zum Hauptspeicher MM wirksam. Im selben Übertragungszyklus wird diese Adresse zusätzlich auf Einhaltung der vorgegebenen Grenzen überprüft, wobei im Fehlerfall mit dem Signal ERR1 die Übertragungssequenz abgebrochen und auf eine vorbestimmte Anzahl, zum Beispiel 3, von Leerzyklen LZ umgeschaltet wird, um der Bereitstellungseinheit CFU die Bildung und die Abspeicherung des entsprechenden Fehlercodes CP-EC zu ermöglichen, bevor das Leitungssystem L-BUS für weitere Anforderungen, die die Ansteuerung der Bereitstellungseinheit erfordern, freigegeben wird.

Nach dem Absetzen der Leseanforderung an den Hauptspeicher M bleibt bei fehlerfreier Adresse das Leitungssystem L-BUS weiterhin gesperrt, und es werden Leerzyklen LZ ausgeführt, bis mit MM.REQ die Bereitstellung der angeforderten Daten aus dem Hauptspeicher MM an der Speicherschnittstelle S-ST gemeldet wird, die dann in den nachfolgenden Übertragungszyklen an die Bereitstellungseinheit CFU und an die zuständige Ein-/Ausgabeeinheit Mx übertragen werden. Im vorliegenden Falle handelt es sich um zwei Datenwörter DAT0 und DAT1, die zusammen das neue Kanalbefehlswort CCW bilden. Dieses Kanalbefehlswort CCW wird im nachfolgenden Leerzyklus überprüft und damit die Grundsequenz A abgeschlossen.

Die Fortsetzung dieser Grundsequenz A mit einer der übrigen Teilsequenzen B bis D ist nun davon abhängig, was die Auswertung des in der Bereitstellungseinheit CFU eingetroffenen Kanalbefehlswortes CCW ergeben hat. Wird ein Verzweigungsbefehl TIC ermittelt, dann wird erst auf die Teilsequenz B und anschließend abhängig vom Signal IDA_{CFU} für die indirekte Adressierung auf die Teilsequenz C oder D übergeleitet, ansonsten folgt auf die Grundsequenz A unmittelbar eine der beiden Teilsequenzen C oder D.

Im vorliegenden Fall sei zunächst angenommen, daß ein Verzweigungsbefehl TIC bei der Prüfung des gelesenen Kanalbefehlswortes CCW ermittelt wird und demzufolge auf die Teilsequenz B ohne Unterbrechung umzusteuern ist. Dies erfordert eine erneute Anforderung an den Hauptspeicher MM, so daß im ersten Übertragungszyklus das zwischengespeicherte Parameterwort MM-PAR und anschließend die im ausgewerteten Kanalbefehlswort enthaltene neue Adresse TIC-AD übertragen wird. Diese Adresse wird außerdem auf ihre Grenzeinhaltung überprüft. Der weitere Ablauf dieser Teilsequenz ist dann der gleiche wie der bei der Grundsequenz A, an deren Ende unter der Voraussetzung, daß auf einen Verzweigungsbefehl kein weiterer folgen darf, der Übergang auf eine der Teilsequenzen C oder D erfolgt.

Bei direkter Adressierung (IDA=0) entpsricht der Adressenteil AD im Kanalbefehlswort CCW (FIG 7) unmittelbar der Datenseitenadresse für den Hauptspeicher, die lediglich zu überprüfen ist. Diese Sequenz besteht daher aus einer vorgegebenen Anzahl von Leerzyklen ohne Übertragungsfunktion, um der Bereitstellungseinheit CFU die notwendige Zeit einzuräumen, damit die Adressenprüfung durchgeführt werden kann und die Einträge in den beiden Speichern CFUS und CFUCWS angepaßt werden können.

Bei indirekter Adressierung (IDA=1) ist eine erneute Leseanforderung an den Hauptspeicher MM erforderlich, wobei die aus dem neuen Kanalbefehlswort CCW entnommene und im Speicher CFUS zwischengespeicherte Adresse IDAWA als Speicheradresse verwendet wird. Die darauffolgend bis zur Rückmeldung MM.REQ anfallenden Leerzyklen LZx können bereits für die Anpassung der Einträge genutzt werden. Nach Übertragung des benötigten Adressenwortes IDAW erfolgt in analoger Weise die Adressenprüfung und während weiterer Leerzyklen LZy die Fortführung der Anpassung der Einträge, wobei die Anzahl der Leerzyklen LZy einer vorgegebenen Mindestanzahl entspricht, die entsprechend FIG 9 ausreicht, die restlichen Anpassungen vorzunehmen. Darüber hinaus kann die Anzahl der Leerzyklen LZy jeweils um weitere Leerzyklen aufgestockt werden, wenn die Anzahl der Leerzyklen LZx nicht ausgereicht hat, bereits alle zu diesem Zeitpunkt möglichen Anpassungen vorzunehmen, weil die Lesedaten vorzeitig zur Verfügung standen. Diese rein zahlenmäßige Überwachung der erforderlichen Leerzyklen für die Anpassung der Einträge in der Bereitstellungseinheit CFU kontrolliert in einfacher Weise die Ablaufsteuerung SEQ-ST der zentralen Steuereinheit BUMA (FIG 2) des Leitungssystems L-BUS.

Wie aus dem Ablaufschema von FIG 11 ersichtlich, können also im Rahmen der Bereitstellung eines Kanalbefehlswortes CCW bis zu drei Leseanforderungen an den Hauptspeicher innerhalb einer einzigen Übertragungssequenz gestellt werden, während der das Leitungssystem L-BUS für weitere Anforderungen durch andere Ein-/Ausgabeeinheiten nicht zur Verfügung steht. Lediglich während der Leerzyklen LZ können gegebenenfalls aufgrund einer früheren Datenleseanforderung einer anderen Ein-/Ausgabeeinheit im Rahmen eines reinen Nutzdatentransfers vom Hauptspeicher MM gelieferten Nutzdaten, die nicht auch an die Bereitstellungseinheit CFU zu liefern sind, übertragen werden. Die im Rahmen der Bereitstellung eines neuen Kanalbefehlswortes CCW notwendigen Arbeiten genießen also Vorrang vor allen anderen Arbeiten am Leitungssystem L-BUS, um eine zeitgerechte Bereitstellung zu ermöglichen.

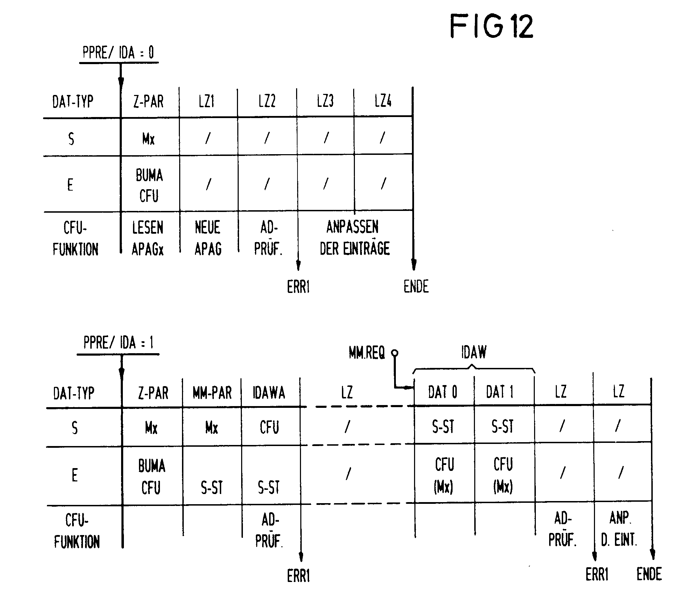

Wesentlich weniger zeitaufwendig gestaltet sich eine im Voraus angeforderte Bereitstellung einer weiteren Datenseitenadresse durch die Bereitstellungseinheit CFU. FIG 12 zeigt die entsprechenden Ablaufschemen bei direkter und indirekter Adressierung.

Bei direkter Adressierung (IDA=0) ist die Arbeit allein auf die Bereitstellungseinheit CFU beschränkt, wobei das Leitungssystem L-BUS eine vorgegebene Anzahl von Leerzyklen, zum Beispiel LZ1 bis LZ4, ausführt, während der das Leitungssystem ebenfalls gesperrt ist.

Bei indirekter Adressierung (IDA=1) erfolgt wie bei der Teilsequenz D in FIG 11 eine Leseanforderung an den Hauptspeicher MM, um das neue Basisadressenwort IDAW zu lesen. Dieser Lesevorgang liefert in zwei aufeinanderfolgenden Datenübertragungszyklen, wie bereits erläutert, zwei verschiedene Adressenwörter 1.IDAW und 2.IDAW, aus denen das jeweils zuständige mit Hilfe des Adresenbits 29 ausgewählt wird. Zwei nachfolgende Leerzyklen LZ ermöglichen dann vor Abschluß dieser Übertragungssequenz die Adressenüberprüfung und die Anpassung im Speicher CFUS.

In analoger Weise laufen auch alle übrigen Speicherzugriffe durch die einzelnen Ein-/Ausgabeeinheiten ab, indem zunächst das Parameterwort Z-PAR an die zentrale Steuereinheit BUMA und an die Bereitstellungseinheit CFU übertragen, anschließend das Speicherparameterwort MM-PAR und schließlich von der Bereitstellungseinheit CFU die jeweils benötigte Speicheradresse bereitgestellt wird, wobei aus dem Parameterwort Z-PAR jeweils ableitbar ist, welche Adresse benötigt wird, ob jeweils zwei oder acht Datenwörter übertragen werden sollen und welche Einheiten bei einer Leseanforderung als Empfänger für die gelesenen Daten arbeiten, zum Beispiel nur die anfordernde Ein-/Ausgabeeinheit Mx bei reinem Nutzdatentransfer und/oder die Bereitstellungseinheit CFU beim Zugriff beispielsweise zum Subkanalbereich im Hauptspeicher, um zum Beispiel einen Ein-/Ausgabeauftrag abzuholen.

Wie die beschriebenen Arbeitsabläufe der Bereitstellungseinheit CFU zeigen, ist eine Reihe von Funktionen innerhalb kurzer Zeit durchzuführen, um die Dauer der jeweiligen Blockierung des Leitungssystems L-BUS so klein wie möglich zu halten. Dem trägt der gewählte strukturelle Aufbau der Bereitstellungseinheit CFU Rechnung. So ist die im Rahmen einer speicherprogrammierten Steuerung vorgesehene arithmetische/logische Einheit ALU in ihrer Arbeitsweise auf die benötigten Addierfunktionen beschränkt. Anstelle des üblichen Ausgabemultiplexers ist ein besonders ausgebildeter Ausgabemischer DOUTMIX vorgesehen, der in einem Durchlauf Datenteile aus verschiedenen Quellen mischen und für die Übertragung und/oder Prüfung bereitstellt. Die notwendigen Prüfungen werden dagegen nicht programmgesteuert abgewickelt, sondern diese Aufgabe ist gesonderten Prüfeinrichtungen CPC, AORC und ACC in fest verdrahteter Logik übertragen, die demzufolge wesentlich schneller arbeiten. Hinzu kommt der auf die speziellen Aufgabe der Bereitstellungseinheit CFU zugeschnittene Steuerungsablauf durch die Ablaufsteuerung CFU-ST mit in den Mikrobefehlen vorgesehenen und insbesondere auf die einzelnen Einheiten wie ALU, DOUTMIX sowie den Prüfeinrichtungen CPC, AORC und ACC abgestimmten Spezialfunktion, die zusammen die beschriebene Arbeitsweise sicherstellen.

Die anhand von FIG 8 bis FIG 10 erläuterten Verfahrensabläufe innerhalb der Bereitstellungseinheit CFU geben lediglich das zugrundeliegende funktionelle Grundschema der auszuführenden Funktionen wieder. Dieses Funktionsschema kann beispielsweise zur Abstimmung mit den Übertragungssequenzen in der einen oder anderen Weise abgeändert werden. So ist es ohne weiteres möglich, die Adressenprüfung parallel zur Übertragung an die Speicherschnittstelle S-ST mit der Prüfeinrichtung AORC, wie es bei den Ablaufschemen von FIG 11 und FIG 12 angedeutet ist, und nicht im Vorlauf zur eigentlichen Übertragung durchzuführen. Auch können beim Eintreffen der Adressenwörter IDAWA bzw. IDAW diese im selben Übertragungszyklus an die entsprechende Eintragszeile im Speicher CFUS weitergeleitet sowie auf Einhaltung der Grenzen überprüft werden, so daß die Anpassung der diesbezüglichen Einträge im Speicher CFUS unmittelbar nach Empfang dieser Adressenwörter erfolgt. Dies ist insbesondere beim Lesen der jeweils ersten beiden Adressenwörter 1.IDAW und 2.IDAW erforderlich, die in aufeinanderfolgenden Übertragungszyklen eintreffen und im Register IDATR zwischengespeichert werden, da dieses Register geräumt sein muß, wenn das zweite Adressenwort eintrifft. Auch kann die Anpassung des Basisadressenwortes IDAWA gegebenenfalls erst nach Eintreffen der Adressenwörter IDAW erfolgen bzw. die Anpassung des zugehörigen Steuerwortes CFUCW im Speicher CFUCWS vorgezogen werden, wenn beispielsweise im letzteren Falle die Lesedaten aus dem Hauptspeicher MM auf sich warten lassen.

## Patentansprüche

1. Verfahren zur zeitgerechten Bereitstellung von nicht im voraus lesbaren Kanalbefehlswörtern (CCW) im Rahmen der Ausführung von Ein-/Ausgabeoperationen in einem mit realen Speicheradressen arbeitenden Ein-/Ausgabesystem einer Datenverarbeitungsanlage, wobei das Ein-/Ausgabesystem aus einem gesonderten Ein-/Ausgabeleitungssystem (L-BUS/BUMA) mit wenigstens einer daran angeschlossenen und weitgehend selbständig arbeitenden Ein-/Ausgabeeinheit (Mx) mit angeschlossenen peripheren Geräten (DEV) und einem Prozessor (IOP) zur Unterstützung der von den Ein-/Ausgabeeinheiten (Mx) durchzuführenden Ein-/Ausgabeoperationen besteht und wobei das Ein-/Ausgabeleitungssystem (L-BUS/BUMA) unmittelbar über eine Schnittstellensteuerung (S-ST) mit der Zugriffssteuerung (S-BUS/BC-S) für den Hauptspeicher (MM) der Datenverarbeitungsanlage koppelbar ist,
**dadurch gekennzeichnet,**
daß die Bereitstellung der von den einzelnen Ein-/Ausgabeeinheiten (Mx) nacheinander benötigten Kanalbefehlswörter (CCW) durch eine gesonderte, an das Ein-/Ausgabeleitungssystem (L-BUS/BUMA) angeschlossene Bereitstellungseinheit (CFU) gesteuert wird, die die Speicheradresse (CCWA) für das von einer der Ein-/Ausgabeeinheiten (Mx) jeweils benötigte Kanalbefehlswort (CCW) sowie die übrigen für die Ausführung der Ein-/Ausgabeoperationen benötigten Speicheradressen und Steuerkennzeichen verwaltet,
- daß nach Aufbereitung eines vorliegenden Ein-/Ausgabeauftrages durch den unterstützenden Prozessor (IOP) mit Übergabe der Ausgangssteuerinformationen und -adressen an die Bereitstellungseinheit (CFU) und nach Benachrichtigung der zuständigen Ein-/Ausgabeeinheit (Mx) über einen vorliegenden Auftrag die jeweilige Ein-/Ausgabeeinheit (Mx) das eingeleitete Kanalprogramm im Zusammenwirken mit der Bereitstellungseinheit (CFU) fortführt,
- daß nach jeder vom Ein-/Ausgabeleitungssystem (L-BUS/BUMA) angenommenen Anforderung einer Ein-/Ausgabeeinheit (Mx) auf Zuteilung des Ein-/Ausgabeleitungssystems im Rahmen der Abwicklung eines mitgeteilten Ein-/Ausgabeauftrages zugleich mit der Übermittlung des Verbindungswunsches (Z-PAR) an die Steuereinheit (BUMA) des Ein-/Ausgabeleitungssystems auch die Bereitstellungseinheit (CFU) angesteuert und dieser die Art der Anforderung mitgeteilt wird,
- daß bei gewünschten Zugriffen zum Hauptspeicher (MM) nach Übertragung der Zugriffsparameter (MM-PAR) von der sendenden Ein-/Ausgabeeinheit (Mx) zur Schnittstellensteuerung (S-ST) die zusätzlich benötigte Speicheradresse (MM-AD) von der Bereitstellungseinheit (CFU) an die Schnittstellensteuerung (S-ST) geliefert wird und
- daß bei Speicherzugriffen für ein Kanalbefehlswort (CCW) das vom Hauptspeicher (MM) über die Schnittstellensteuerung (S-ST) angelieferte Kanalbefehlswort (CCW) über das Ein-/Ausgabeleitungssystem (L-BUS) parallel sowohl der zuständigen Ein-/Ausgabeeinheit (Mx) als auch der Bereitstellungseinheit (CFU) zugeleitet wird, die das neue Kanalbefehlswort (CCW) überprüft und bei Fehlerfreiheit die Adressenhaltung anhand der mitgeführten Adresseninformation und die betroffenen Steuerkennzeichen anpaßt.

2. Verfahren nach Anspruch 1,
**dadurch gekennzeichnet,** daß jedes gelesene und an die Bereitstellungseinheit (CFU) übertragene Kanalbefehlswort (CCW) decodiert und in üblicher Weise überprüft wird und daß die Bereitstellungseinheit (CFU) bei Vorliegen eines Verzweigungsbefehles (TIC) sofort das nächstgültige Kanalbefehlswort anhand der im Verzweigungsbefehl enthaltenen Adresse (TIC-AD) vom Hauptspeicher (MM) anfordert.

3. Verfahren nach Anspruch 1 oder 2,
**dadurch gekennzeichnet,**daß bei einer durch ein decodiertes Kanalbefehlswort (CCW) angezeigten indirekten Adressierung (IDA=1) die Bereitstellungseinheit (CFU) anhand der im Kanalbefehlswort enthaltenen Tabellenadresse (IDAWA) sofort das entsprechende indirekte Adressenwort (IDAW) vom Hauptspeicher (MM) abruft, aus der dann die jeweilige Datenseitenadresse (APAG0 bzw. APAG1) für die im Hauptspeicher (MM) beim Datentransfer von der oder zur anfordernden Ein-/Ausgabeeinheit (Mx) anzusteuernde Datenseite abgeleitet wird.

4. Verfahren nach Anspruch 2 oder 3,
**dadurch gekennzeichnet,** daß das bei Anforderungen der Ein-/Ausgabeeinheit (Mx) für Zugriffe zum Hauptspeicher (MM) zur Schnittstellensteuerung (S-ST) übertragene Parameterwort (MM-PAR) zwischengespeichert wird, so daß es für nachfolgend notwendig werdende und allein durch die Bereitstellungseinheit (CFU) ausgelöste Zugriffe zum Hauptspeicher (MM) verfügbar ist.

5. Verfahren nach einem der Ansprüche 1 bis 4,
**dadurch gekennzeichnet,** daß bei Anforderungen einer der Ein-/Ausgabeeinheiten (Mx) für das Vorabbereitstellen einer neuen Datenseitenadresse (APAG...) für die im Hauptspeicher (M) beim Datentransfer von der oder zur anfordernden Ein-/Ausgabeeinheit (Mx) anzusteuernde Datenseite die Bereitstellungseinheit (CFU) im Falle der direkten Adressierung (IDA=0) die nächstfolgende Datenseitenadresse (APAG...) unmittelbar von der gültigen Datenseitenadresse ausgehend intern ermittelt, während sie im Falle der indirekten Adressierung (IDA=1) die von der Ein-/Ausgabeeinheit ausgelöste Anforderung an den Hauptspeicher (MM) durch die zugehörige Speicheradresse anhand der vorliegenden gültigen Tabellenadresse (IDAWA) ergänzt und nach Eintreffen des entsprechenden indirekten Adressenwortes (IDAW) daraus die nächste Datenseitenadresse (APAG...) ableitet.

6. Verfahren nach einem der Ansprüche 1 bis 5,
**dadurch gekennzeichnet,** daß aufgrund der Auswertung von im Rahmen einer eingeleiteten Bereitstellungsfunktion der Bereitstellungseinheit (CFU) anfallenden Informationen (z.B. Kanalbefehlswort CCW) notwendig werdende Änderungen des eingeleiteten Arbeitsablaufes der zentralen Steuereinheit (BUMA) des Ein-/Ausgabeleitungssystems (L-BUS) durch entsprechende Reaktionssignale (TIC, IDA, ERR) gemeldet werden, die die damit gegebenenfalls verbundene Umschaltung der Verbindungen und der Datenübertragung steuert, und daß während einer aufgrund einer Anforderung durch eine der Ein-/Ausgabeeinheiten (Mx) ausgelösten Bereitstellungsfunktion der Bereitstellungseinheit (CFU) weitere Anforderungen von Ein-/Ausgabeeinheiten zur Bereitstellung des Ein-/Ausgabeleitungssystems (L-BUS) durch die zentrale Steuereinheit (BUMA) des Leitungssystems nicht berücksichtigt werden.

7. Verfahren nach Anspruch 6,
**dadurch gekennzeichnet,** daß im Rahmen eines Datentransfers zu einer der Ein-/Ausgabeeinheiten (Mx) aufgrund vorhergehender Lesezugriffe zum Hauptspeicher (MM) die nachfolgend vom Hauptspeicher (MM) an die Speicherschnittstelle (S-ST) übergebenen Lesedaten nach Auslösung einer Bereitstellungsfunktion durch die Bereitstellungseinheit (CFU) mit erforderlichem Zugriff zum Hauptspeicher (MM) in der auf die Leseanforderung durch die Bereitstellungseinheit folgenden Wartezeit zur zuständigen Ein-/Ausgabeeinheit (Mx) übertragen werden.

8. Verfahren nach einem der Ansprüche 1 bis 7 für Datenverarbeitungsanlagen, bei denen für jedes über das Ein-/Ausgabeleitungssystem (L-BUS) zu übertragende Informations- oder Datenwort von der zentralen Steuereinheit (BUMA) des Leitungssystems (L-BUS) jeweils ein taktgesteuerter Übertragungszyklus zur Verfügung gestellt wird, wobei die jeweilige Datenquelle mit der jeweiligen Datensenke verbunden wird, und bei denen nach Annahme einer Anforderung auf Zuteilung des Ein-/Ausgabeleitungssytems (L-BUS) abhängig vom während eines ersten Übertragungszyklus übertragenen Parameterwortes (Z-PAR) jeweils eine vorgegebene Anzahl von Übertragungszyklen zur Verfügung gestellt wird, die insgesamt eine Übertragungssequenz bilden, wobei während der einzelnen Übertragungszyklen einer Übertragungssequenz unterschiedliche Verbindungswege zwischen den einzelnen Einheiten am Ein-/Ausgabeleitungssystem (L-BUS) als Datenquellen und Datensenken herstellbar sind,
**dadurch gekennzeichnet,** daß die Anzahl der jeweils eine Übertragungssequenz bildenden Übertragungszyklen von der jeweils ausgelösten Arbeitsfunktion der Bereitstellungseinheit (CFU) abhängig und abhängig von den Reaktionssignalen (TIC, IDA, ERR) änderbar ist, wobei allein innerhalb der Bereitstellungseinheit (CFU) ohne Beanspruchung des Leitungssystems (L-BUS) auszuführende Funktionen durch eine entsprechende Anzahl von Leerzyklen (LZ) innerhalb der eingeleiteten Übertragungssequenz überbrückt werden, während beim Abruf von die Bereitstellungseinheit (CFU) betreffenden Lesedaten aus dem Hauptspeicher (MM) auftretende Wartezeiten die jeweilige Übertragungssequenz um eine entsprechende Anzahl von Leerzyklen verlängern, und daß während einer laufenden Übertragungssequenz Anforderungen der einzelnen Ein-/Ausgabeeinheiten (Mx) von der zentralen Steuereinheit (BUMA) nicht angenommen, sondern nur Anforderungen (MM.REQ) der Schnittstelle (S-ST) auf Übernahme von aus dem Hauptspeicher (MM) gelesenen Daten berücksichtigt werden.

9. Verfahren nach Anspruch 8,
**dadurch gekennzeichnet,** daß bei einer auf eine vorhergehende Leseanforderung einer der Ein-/Ausgabeeinheiten (Mx) zurückgehenden Anforderung (MM.REQ) der Schnittstelle (S-ST) zur Übertragung von Nutzdaten an die zuständige Ein-/Ausgabeeinheit (Mx) eine nachfolgend eingeleitete und die Mitwirkung der Bereitstellungseinheit (CFU) erfordernde Übertragungssequenz während auftretender Wartezeiten für die Bereitstellung von aus dem Hauptspeicher (MM) angeforderten Daten vorübergehend für die Übertragung der anstehenden Nutzdaten zur zuständigen Ein-/Ausgabeeinheit (Mx) unterbrochen wird, indem eine entsprechende Anzahl von Übertragungszyklen mit entsprechender Verbindungsherstellung in die unterbrochene Übertragungssequenz eingefügt wird.

10. Anordnung zur Durchführung des Verfahrens nach einem der Ansprüche 1 bis 9,
**dadurch gekennzeichnet,** daß die Bereitstellungseinheit (CFU),
- einen ersten Speicher (CFUS) mit einer der Anzahl der Ein-/Ausgabeeinheiten (M...) am Ein-/Ausgabeleitungssystem (L-BUS) entsprechenden Anzahl von Speicherbereichen für die Aufnahme der in Verbindung mit der Ausführung von Ein-/Ausgabeoperationen benötigten Adressen für die Bereitstellung der Kanalbefehlswörter (CCW) eines Kanalprogramms und der anzusteuernden Datenbereiche im Hauptspeicher (MM),
- einen zweiten Speicher (CFUCWS) mit einer der Anzahl der Ein-/Ausgabeeinheiten (M...) am Ein-/Ausgabeleitungssystem (L-BUS) entsprechenden Anzahl von Speichereinträgen für je ein einheitsspezifisches Steuerwort (CFUCW), das sich aus verschiedenen Steuerbits bzw. -Bitkombinationen zusammensetzt,
- eine Reihe von Prüfeinrichtungen (AEC, AORC, CPC) zur Prüfung der Berechtigung von Zugriffen zur Bereitstellungseinheit (CFU), zur Überprüfung der Adressen auf Einhaltung vorgebener Grenzen und Ausrichtungen sowie zur Überprüfung der Kanalbefehlswörter (CCW) und
- eine Ablaufsteuerung (CFU-ST) aufweist, die in Verbindung mit Decodiereinrichtungen (ZPAR-DEC, CCW-DEC), mehreren Registern, eine auf die notwendigsten Funktionen beschränkten arithmetischen/logischen Einheit (ALU) Anforderungen an die Bereitstellungseinheit (CFU) überwacht, die zugeführten Daten (Kanalbefehlswörter CCW und Adressen) auswertet und die Einträge in den beiden Speichern (CFUS, CFUCWS) anpaßt sowie die jeweils benötigten Adressen und Steuerinformationen für eine Übertragung über das Ein-/Ausgabeleitungssystem (L-BUS) bereitstellt.

11. Anordnung nach Anspruch 10,
**dadurch gekennzeichnet,** daß zum Zusammenfassen und Austauschen von aus verschiedenen Quellen der Bereitstellungseinheit (CFU) bereitgestellten Adressenteilen der im einen Speicher (CFUS) gespeicherten Adressen und der aus verschiedenen Quellen bereitgestellten Steuerbits bzw. -bitkombinationen der im anderen Speicher (CFUCWS) gespeicherten Steuerwörter (CFUCW) ein gemeinsamer Ausgabemischer (OUTMIX) vorgesehen ist, dessen Ausgang einerseits auf das Ein-/Ausgabeleitungssystem (L-BUS) durchschaltbar und andererseits über einen Eingang der arithmetischen/logischen Einheit (ALU) auf ein gemeinsames internes Leitungssystem (P-BUS) für die Weiterleitung an die Speicher (CFUS bzw. CFUCWS) durchschaltbar ist.

12. Anordnung nach Anspruch 10 oder 11,
**dadurch gekennzeichnet,** daß die Bereitstellungseinheit (CFU) mit der Ablaufsteuerung (SEQ-ST) der zentralen Steuereinheit (BUMA) des Ein-/Ausgabeleitungssystems (L-BUS) über gesonderte Signalleitungen für die Reaktionssignale (TIC, IDA_{CFU}, ERR) zur Abänderung einer eingeleiteten Übertragungssequenz verbunden ist.

## Claims

1. Method for the provision at the correct time of channel command words (CCW) that cannot be read in advance during the execution of input/output operations in an input/output system of a data processing system which operates with real memory addresses, in which the input/output system comprises a separate input/output line system (L-BUS/BUMA) having at least one input/output unit (Mx) with connected peripheral devices (DEV) which is connected thereto and operates largely independently, and a processor (IOP) for supporting the input/output operations to be executed by the input/output units (Mx), and in which the input/output line system (L-BUS/BUMA) can be coupled directly to the access controller (S-BUS/B-CS) for the main memory (MM) of the data processing system via an interface controller (S-ST), characterised
- in that the provision of the channel command words (CCW) successively required by the individual input/output units (Mx) is controlled by a separate preparation unit (CFU) which is connected to the input/output line system (L-BUS/BUMA) and which manages the memory address (CCWA) for the respective channel command word (CCW) required by one of the input/output units (Mx) as well as the other memory addresses and control codes required for the execution of the input/output operations,
- in that after preparation of a pending input/output job by the supporting processor (IOP) with transfer of the output control information and addresses to the preparation unit (CFU), and after the responsible input/output unit (Mx) has been notified of a pending job, the respective input/output unit (Mx) continues the initiated channel program in cooperation with the preparation unit (CFU),
- in that after each request of an input/output unit (Mx) for allocation of the input/output line system accepted by the input/output line system (L-BUS/BUMA) during the processing of a notified input/output job, at the same time as the transfer of the connection request (Z-PAR) to the control unit (BUMA) of the input/output line system, the preparation unit (CFU) is also activated and is notified of the type of request,
- in that in the case of accesses to the main memory (MM) being requested, after transfer of the access parameters (MM-PAR) from the sending input/output unit (Mx) to the interface controller (S-ST), the additionally required memory address (MM-AD) is supplied by the preparation unit (CFU) to the interface controller (S-ST), and
- in that in the case of memory accesses for a channel command word (CCW), the channel command word (CCW) supplied from the main memory (MM) via the interface controller (S-ST) is supplied via the input/output line system (L-BUS) in parallel to both the responsible input/output unit (Mx) and the preparation unit (CFU), which checks the new channel command word (CCW), and if it is error-free adjusts the address holding on the basis of the address information carried and the respective control codes.

2. Method according to Claim 1, characterised in that each channel command word (CCW) read and transferred to the preparation unit (CFU) is decoded and is checked in the customary manner, and in that if a branch command (TIC) is present, the preparation unit (CFU) immediately requests the next valid channel command word from the main memory (MM) on the basis of the address (TIC-AD) contained in the branch command.

3. Method according to Claim 1 or 2, characterised in that in the case of indirect addressing (IDA=1) indicated by a decoded channel command word (CCW), the preparation unit (CFU) immediately calls up the corresponding indirect address word (IDAW) from the main memory (MM) on the basis of the table address (IDAWA) contained in the channel command word, from which the respective data page address (APAG0 or APAG1) for the data page to be addressed in the main memory (MM) during data transfer from or to the requesting input/output unit (Mx) is then derived.

4. Method according to Claim 2 or 3, characterised in that the parameter word (MM-PAR) transferred to the interface controller (S-ST) in the case of requests of the input/output unit (Mx) for accesses to the main memory (MM) is temporarily stored so that it is available for accesses to the main memory (MM) that subsequently become necessary and are triggered solely by the preparation unit (CFU).

5. Method according to one of Claims 1 to 4, characterised in that in the case of requests of one of the input/output units (Mx) for the prior provision of a new data page address (APAG...) for the data page to be addressed in the main memory (M) during data transfer from or to the requesting input/output unit (Mx), in the case of direct addressing (IDA=0) the preparation unit (CFU) internally determines the next data page address (APAG...) directly from the valid data page address, whereas in the case of indirect addressing (IDA=1) it extends the request to the main memory (MM) triggered by the input/output unit by the associated memory address on the basis of the valid table address (IDAWA) present, and after the arrival of the corresponding indirect address word (IDAW), derives the next data page address (APAG...) therefrom.

6. Method according to one of Claims 1 to 5, characterised in that changes to the initiated operation cycle of the central control unit (BUMA) of the input/output line system (L-BUS) that become necessary as a result of the evaluation of information (for example channel command word CCW) occurring during an initiated preparation function of the preparation unit (CFU) are reported by means of corresponding reaction signals (TIC, IDA, ERR), which control the possibly concomitant switch-over of the connections and the data transfer, and in that during a preparation function of the preparation unit (CFU) triggered as a result of a request by one of the input/output units (Mx), further requests of input/output units for the provision of the input/output line system (L-BUS) are ignored by the central control unit (BUMA) of the line system.

7. Method according to Claim 6, characterised in that during a data transfer to one of the input/output units (Mx), as a result of preceding read accesses to the main memory (MM), the read data subsequently transferred from the main memory (MM) to the memory interface (S-ST) are transferred to the responsible input/output unit (Mx) after triggering of a preparation function by the preparation unit (CFU) with the required access to the main memory (MM) in the wait time following the read request by the preparation unit.

8. Method according to one of Claims 1 to 7 for data processing systems in which one clock-controlled transfer cycle is made available in each case for each information or data word to be transferred via the input/output line system (L-BUS) from the central control unit (BUMA) of the line system (L-BUS), the respective data source being connected to the respective data sink, and in which, after acceptance of a request for allocation of the input/output line system (L-BUS), depending on the parameter word (Z-PAR) transferred during a first transfer cycle, in each case a predetermined number of transfer cycles which together form a transfer sequence is made available, it being possible to establish different connection paths between the individual units on the input/output line system (L-BUS) as data sources and data sinks during the individual transfer cycles of a transfer sequence, characterised in that the number of transfer cycles forming a transfer sequence in each case depends on the operating function of the preparation unit (CFU) triggered in each case and can be changed depending on the reaction signals (TIC, IDA, ERR), functions to be executed solely within the preparation unit (CFU) without recourse to the line system (L-BUS) being bridged by a corresponding number of empty cycles (LZ) within the initiated transfer sequence, whereas wait times occurring when read data relating to the preparation unit (CFU) are called up from the main memory (MM) extend the respective transfer sequence by a corresponding number of empty cycles, and in that when a transfer sequence is in progress requests of the individual input/output units (Mx) are not accepted by the central control unit (BUMA), but rather only requests (MM.REQ) of the interface (S-ST) for transfer of data read from the main memory (MM) are taken into account.

9. Method according to Claim 8, characterised in that in the case of a request (MM.REQ) of the interface (S-ST) for transfer of useful data to the responsible input/output unit (Mx) which goes back to a previous read request of one of the input/output units (Mx), during wait times arising for the provision of data requested from the main memory (MM), a subsequently initiated transfer sequence that requires the cooperation of the preparation unit (CFU) is temporarily interrupted for the transfer of the pending useful data to the responsible input/output unit (Mx) in that a corresponding number of transfer cycles is inserted into the interrupted transfer sequence with corresponding connection establishment.

10. Arrangement for carrying out the method according to one of Claims 1 to 9, characterised in that the preparation unit (CFU) contains
- a first memory (CFUS) having a number of memory areas corresponding to the number of input/output units (M...) on the input/output line system (L-BUS) for the storage of the addresses required in connection with the execution of input/output operations for the provision of the channel command words (CCW) of a channel program and the data areas to be addressed in the main memory (MM),
- a second memory (CFUCWS) having a number of memory entries corresponding to the number of input/output units (M...) on the input/output line system (L-BUS) for in each case one unit-specific control word (CFUCW) composed of various control bits or control bit combinations,
- a range of checking devices (AEC, AORC, CPC) for checking the authorisation of accesses to the preparation unit (CFU), for checking the addresses for compliance with given limits and alignments, and also for checking the channel command words (CCW), and
- an execution sequence controller (CFU-ST) which, in conjunction with decoding devices (ZPAR-DEC, CCW-DEC), a plurality of registers, an arithmetic/logic unit (ALU) limited to the most necessary functions, monitors requests to the preparation unit (CFU), evaluates the data supplied (channel command words CCW and addresses), and adjusts the entries in the two memories (CFUS, CFUCWS), and provides the respective addresses and control information required for a transfer via the input/output line system (L-BUS).

11. Arrangement according to Claim 10, characterised in that a shared output mixer (OUTMIX) is provided for combining and exchanging address parts, provided from various sources of the preparation unit (CFU), of the addresses stored in a memory (CFUS) and of the control bits or control bit combinations, provided from various sources, of the control words (CFUCW) stored in the other memory (CFUCWS), the output of which output mixer can be connected through to the input/output line system (L-BUS) on the one hand, and on the other hand can be connected through via one input of the arithmetic/logic unit (ALU) to a shared internal line system (P-BUS) for the forwarding to the memory (CFUS or CFUCWS).

12. Arrangement according to Claim 10 or 11, characterised in that the preparation unit (CFU) is connected to the execution sequence controller (SEQ-ST) of the central control unit (BUMA) of the input/output line system (L-BUS) via separate signal lines for the reaction signals (TIC, IDA_{CFU}, ERR) for altering an initiated transfer sequence.

## Revendications

1. Procédé pour préparer en temps opportun des mots d'instructions de canal (CCW), non lisibles au préalable, dans le cadre de l'exécution d'opérations d'entrée/sortie dans un système d'entrée/sortie travaillant avec des adresses réelles de mémoire, d'une installation de traitement de données, selon lequel le système d'entrée/sortie est constitué par un système particulier de lignes d'entrée/sortie (L-BUS/BUMA) auquel est raccordé au moins une unité d'entrée/sortie (Mx), qui travaille dans une large mesure de façon autonome et à laquelle sont raccordés des appareils périphériques (DEV), et par un processeur (IOP) servant à assister les opérations d'entrée/sortie devant être exécutées par les unités d'entrée/sortie (Mx), et le système de lignes d'entrée/sortie (L-BUS/BUMA) peut être couplé directement par l'intermédiaire d'une unité de commande d'interface (S-ST) à l'unité de commande d'accès (S-BUS/BC-S) pour la mémoire principale (MM) de l'installation de traitement de données,
caractérisé par le fait
que la préparation des mots d'instructions de canal (CCW), qui sont requis successivement par les différentes unités d'entrée/sortie (Mx), est commandée par une unité particulière de préparation (CFU), qui est raccordée au système de lignes d'entrée/sortie (L-BUS/BUMA) et gère l'adresse de mémoire (CCW) pour le mot d'instruction de canal (CCW) respectivement requis par l'une des unités d'entrée/sortie (Mx), ainsi que les autres adresses de mémoire et signaux caractéristiques de commande, qui sont requis pour l'exécution des opérations d'entrée/sortie,
- qu'après la préparation d'un ordre d'entrée/sortie présent par le processeur d'assistance (IOP) avec transfert des informations et des adresses de commande de sortie à l'unité de préparation (CFU) et après que l'unité d'entrée/sortie associée (Mx) a signalé un ordre présent, l'unité d'entrée/sortie respective (Mx) poursuit le programme de canal déclenché, en coopération avec l'unité de préparation (CFU),
- qu'après chaque demande appliquée par le système de lignes d'entrée/sortie (L-BUS/BUMA) à une unité d'entrée/sortie (Mx) en vue d'une affectation du système de lignes d'entrée/sortie dans le cadre du déroulement d'un ordre communiqué d'entrée/sortie, également l'unité de préparation (CFU) est commandée conjointement avec la transmission du désir d'établissement de liaison (Z-PAR) à l'unité de commande (BUMA) du système de lignes d'entrée/sortie et le type de la demande est communiqué à cette unité de préparation,
- que, dans le cas d'accès souhaités à la mémoire principale (MM), après la transmission des paramètres d'accès (MM-PAR) par l'unité d'entrée/sortie (Mx) réalisant l'émission en direction de l'unité de commande d'interface (S-ST), l'adresse de mémoire (MM-AD), qui est nécessaire en supplément, est délivrée par l'unité de préparation (CFU) à une unité de commande d'interface (S-ST), et
- que, dans le cas d'accès à la mémoire pour un mot d'instruction de canal (CCW), le mot d'instruction de canal (CCW) délivré par la mémoire principale (MM) par l'intermédiaire d'une unité de commande d'interface (S-ST), est envoyé par l'intermédiaire du système de lignes d'entrée/sortie (L-BUS) en parallèle aussi bien à une unité d'entrée/sortie concernée (Mx) qu'à l'unité de préparation (CFU), qui contrôle le nouveau mot d'instruction de cadence (CCW) et, en cas d'absence d'erreur, adapte le maintien de l'adresse sur la base de l'information d'adresse envoyée simultanément et adapte les signaux caractéristiques de commande concernés.

2. Procédé suivant la revendication 1, caractérisé par le fait que chaque mot d'instruction de canal (CCW) lu et transmis à l'unité de préparation (CFU) est décodé et contrôlé de façon usuelle et que, dans le cas de la présence d'une instruction de branchement (TIC), l'unité de préparation (CFU) demande immédiatement à la mémoire principale (MM), le mot d'instruction de canal immédiatement suivant valable sur la base de l'adresse (TIC-AD), contenue dans l'instruction de branchement.

3. Procédé suivant la revendication 1 ou 2, caractérisé par le fait que dans le cas d'un adressage indirect (= 1) indiqué par un mot d'instruction de canal (CCW) décodé, l'unité de préparation (CFU) appelle immédiatement, sur la base de l'adresse de tableau (IDAWA) contenue dans le mot d'instruction de canal, le mot d'adresse indirect correspondant (IDAW), dans la mémoire principale (MM), à partir de laquelle l'adresse de page respective de données (APAGO, APAG1) est alors dérivée pour la page de données qui doit être commandée dans la mémoire principale (MM) lors du transfert de données en provenance ou en direction de l'unité d'entrée/sortie (Mx) effectuant la demande.

4. Procédé suivant la revendication 2 ou 3, caractérisé par le fait que le mot de paramètre (MM-PAR) retransmis dans le cas de demandes formulées par l'unité d'entrée/sortie (Mx) pour des accès à la mémoire principale (MM) en direction de l'unité de commande d'interface (S-ST) est mémorisé temporairement, en sorte qu'il est disponible pour des accès à la mémoire principale (MM), qui deviennent ultérieurement nécessaires et sont déclenchés uniquement par l'unité de préparation (CFU).

5. Procédé suivant l'une des revendications 1 à 4, caractérisé par le fait que dans le cas de demandes de l'une des unités d'entrée/sortie (Mx) pour la délivrance préalable d'une nouvelle adresse de page de données (APAG...) pour la page de données devant être commandée dans la mémoire principale (M) lors du transfert de données en provenance ou en direction de l'unité d'entrée/sortie (Mx) effectuant la demande, l'unité de préparation (CFU) détermine de façon interne l'adresse de page de données (APAG...) immédiatement suivante, directement à partir de l'adresse de page de données valable, dans le cas de l'adressage direct (IDA=0), alors que dans le cas d'adressage indirect (IDA=1), la demande, déclenchée par l'unité d'entrée/sortie et appliquée à la mémoire principale (MM), est complétée par l'adresse de mémoire associée sur la base de l'adresse de tableau valable présente (IDAWA) et, après l'apparition du mot de données indirect correspondant (IDAW), en dérive l'adresse de page de données (APAG...) immédiatement suivante.

6. Procédé suivant l'une des revendications 1 à 7, caractérisé par le fait que sur la base de l'évaluation d'informations (par exemple mot d'instructions de canal CCW), qui arrivent dans le cadre d'une fonction de préparation déclenchée de l'unité de préparation (CFU), des modifications, qui deviennent nécessaires, du cycle déclenché de travail de l'unité de commande centrale (BUMA) du système de lignes d'entrée/sortie (L-BUS), sont signalées par des signaux correspondants de réaction (TIC, IDA, ERR), qui commandent la commutation, qui y est éventuellement liée, des liaisons et de la transmission de données, et que pendant une fonction de préparation de l'unité de préparation (CFU), déclenchée sur la base d'une demande faite par l'une des unités d'entrée/sortie (Mx), d'autres demandes d'unités d'entrée/sortie pour la préparation du système de lignes d'entrée/sortie (L-BUS) ne sont pas prises en compte par l'unité de commande centrale (BUMA) du système de lignes.

7. Procédé suivant la revendication 6, caractérisé par le fait que dans le cadre d'un transfert de données en direction de l'une des unités d'entrée/sortie (Mx), sur la base d'accès précédents de lecture à la mémoire principale (MM), les données de lecture transmises ultérieurement par la mémoire principale (MM) à l'interface de mémoire (S-ST) sont retransmises à l'unité d'entrée/sortie (Mx) concernée, après déclenchement d'une fonction de préparation par l'unité de préparation (CFU) avec accès requis à la mémoire principale (MM), pendant la durée d'attente, qui succède à la demande de lecture faite par l'unité de préparation.

8. Procédé suivant l'une des revendications 1 à 7 pour des installations de traitement de données, dans lesquelles pour chaque mot d'information ou mot de données devant être transmis par l'intermédiaire du système de lignes d'entrée/sortie (L-BUS), respectivement un cycle de transmission commandé de façon cadencée est disponible pour l'unité de commande centrale (BUMA) du système de lignes (L-BUS), la source respective de données étant raccordée au récepteur respectif de données, et dans lesquelles, après la réception d'une demande d'affectation du système de lignes d'entrée/sortie (L-BUS), un nombre prédéterminé de cycles de transmission, qui forment globalement une séquence de transmission, est mis à disposition en fonction du mot de paramètre (Z-PAR) transmis pendant un premier cycle de transmission, et selon lequel, pendant les différents cycles de transmission d'une séquence de transmission, différentes voies de liaison peuvent être établies entre les différentes unités présentes dans le système de lignes d'entrée/sortie (L-BUS) et constituant des sources de données et des récepteurs de données, caractérisé par le fait que le nombre des cycles de transmission, qui forment respectivement une séquence de transmission, dépend de la fonction de travail respectivement déclenchée de l'unité de préparation (CFU) et peut être modifié en fonction des signaux de réaction (TIC, IDA, ERR), auquel cas uniquement à l'intérieur de l'unité de préparation (CFU), des fonctions devant être exécutées sans sollicitation du système de lignes (L-BUS) sont remplacées par un nombre correspondant de cycles vides (LZ) à l'intérieur de la séquence de transmission déclenchée, tandis que des temps d'attente, qui apparaissent lors de l'appel de données de lecture concernant l'unité de préparation (CFU) à partir de la mémoire principale (MM), prolongent la séquence de transmission respective d'un nombre correspondant de cycles vides et que pendant une séquence de transmission en cours, des demandes des différentes unités d'entrée/sortie (Mx) ne sont pas reçues par une unité de commande centrale (BUMA), mais que seules des demandes (MM.REQ) de l'interface (S-ST) sont prises en compte lors de la prise en charge de données lues à partir de la mémoire principale (MM).

9. Procédé suivant la revendication 8, caractérisé par le fait que dans le cas d'une demande (MM.REQ) de l'interface (S-ST), qui se rapporte à une demande de lecture précédente de l'une des unités d'entrée/sortie (Mx), pour la transmission de données utiles à l'unité d'entrée/sortie concernée (Mx), une séquence de transmission, qui est déclenchée ultérieurement et requiert la coopération de l'unité de préparation (CFU), est interrompue de façon transitoire pendant des durées d'attente qui apparaissent pour la préparation de données demandées dans la mémoire principale (MM), pour le transfert des données utiles présentes à l'unité d'entrée/sortie (Mx) associée, par le fait qu'un nombre correspondant de cycles de transmission sont insérés avec établissement correspondant de liaisons dans la séquence de transmission interrompue.

10. Dispositif pour la mise en oeuvre du procédé suivant l'une des revendications 1 à 9, caractérisé par le fait que l'unité de préparation (CFU) comporte
- une première mémoire (CFUS) comportant un nombre, qui correspond au nombre des unités d'entrée/sortie (M...) dans le système de lignes d'entrée/sortie (L-BUS), de zones de mémoire pour la réception des adresses, qui sont nécessaires en liaison avec l'exécution d'opérations d'entrée/sortie, pour la préparation des mots d'instructions de canaux (CCW) d'un programme de canaux et des zones de données, devant être commandées, dans la mémoire principale (MM),
- une seconde mémoire (CFUCWS) comportant un nombre, qui correspond au nombre des unités d'entrée/sortie (M...) dans le système de lignes d'entrée/sortie (L-BUS), d'entrées de mémoire pour respectivement un mot de commande (CFUCWS) spécifique à l'unité et qui se compose de différents bits de commande ou de différentes combinaisons de bits de commande,
- une série de dispositifs de contrôle (AEC,AORC,CPC) pour contrôler le caractère correct d'accès à l'unité de préparation (CFU), pour vérifier si les adresses respectent des limites et des alignements prédéterminés ainsi que pour le contrôle des mots d'instructions de canaux (CCW), et
- une unité de commande d'exécution (CFU-ST), qui, en liaison avec des dispositifs de décodage (ZPAR-DEC, CCW-DEC), plusieurs registres, une unité arithmétique/logique (ALU) limitée aux fonctions les plus nécessaires, contrôle des demandes présentées à l'unité de préparation (CFU), évalue les données envoyées (mot d'instructions de canaux CCW et adresses) et adapte les entrées dans les deux mémoires (CFUS, CFUCWS) et prépare les adresses et informations de commande respectivement nécessaires pour une transmission par l'intermédiaire du système de lignes d'entrée/sortie (L-BUS).

11. Dispositif suivant la revendication 10, caractérisé par le fait que pour la réunion et l'échange de parties, préparées à partir de différentes sources de l'unité de préparation (CFU), des adresses mémorisées dans cette mémoire (CFUS) et des bits de commande ou combinaisons de bits de commande préparées à partir de différentes sources, des mots de commande (CFUCW) mémorisés dans l'autre mémoire (CFUCWS), il est prévu un mélangeur commun de sortie (OUTMIX), dont la sortie peut d'une part être interconnectée au système de lignes d'entrée/sortie (L-BUS) et d'autre part peut être interconnectée par l'intermédiaire d'une entrée d'une unité arithmétique/logique (ALU), à un système interne commun de lignes (P-BUS) pour la retransmission à la mémoire (CFUS ou CFUCWS).

12. Dispositif suivant la revendication 10 ou 11, caractérisé par le fait que l'unité de préparation (CFU) est raccordée à l'unité de commande d'exécution (SEQ-ST) de l'unité de commande centrale (BUMA) du système de lignes d'entrée/sortie (L-BUS) par l'intermédiaire de lignes particulières pour les signaux de réaction (TIC, IDA_{CFU}, ERR) pour la modification d'une séquence de transmission déclenchée.
